# EUROPEAN PATENT SPECIFICATION

(11) **EP 4 560 535 B1**
(45) Date of publication and mention of the grant of the patent: **02.12.2026**
(21) Application number: 25170737.8
(22) Date of filing: 04.10.2021
(51) Int. Cl.: G06N 3/049, G06N 3/065, G06N 3/088

(54) **ADAPTATION OF SNNS THROUGH TRANSIENT SYNCHRONY**
ANPASSUNG VON SNNS DURCH TRANSIENTE SYNCHRONITÄT
ADAPTATION DE SNNS PAR SYNCHRONISATION TRANSITOIRE

(30) Priority: 05.10.2020 US 202063087384 P
(43) Date of publication of application: 28.05.2025
(62) Document number(s) of the earlier application(s) in accordance with Art. 76 EPC: 21786916.3 / 4 226 281
(73) Proprietor: Innatera Nanosystems B.V., 2288 GK Rijswijk (NL)
(72) Inventor: ZJAJO, Amir, 2288 GK Rijswijk (NL); KUMAR, Sumeet Susheel, 2288 GK Rijswijk (NL)
(74) Representative: Hoyng Rokh Monegier B.V.

(56) References cited:
- WO-A2-2020/099680

## Description

### TECHNICAL FIELD

This disclosure generally relates to automatic signal recognition techniques, and more particularly, to temporal control and adaptation that allows the implementation of transient synchrony mechanisms and homeostatic regulation in networks of spiking neurons.

### BACKGROUND

In biological neural network models, each individual neuron communicates asynchronously and through sparse events, or spikes. In such an event-based spiking neural network (SNN), only the neurons which change state generate spikes and may trigger signal processing in subsequent layers, consequently, saving computational resources. Spiking neural networks (SNN) are a promising means of realizing automatic signal recognition (ASR), the recognition of signals through the identification of their constituent features, for many different applications.

SNNs encode information in the form of one or more precisely timed (voltage) spikes, rather than as integer or real-valued vectors. Computations for inference (i.e. inferring the presence of a certain feature in an input signal) may be effectively performed in the analog and temporal domains. Consequently, SNNs are typically realized in hardware as full-custom mixed-signal integrated circuits, which enables them to perform inference functions with several orders of magnitude lower energy consumption than their deep neural network (DNN) counterparts, in addition to having smaller network sizes.

SNNs consist of a network of spiking neurons interconnected by synapses that dictate the strength of the connections between the connected neurons. This strength is represented as a weight, which moderates the effect of the output of a pre-synaptic neuron on the input to a post-synaptic neuron. Typically, these weights are set in a training process that involves exposing the network to a large volume of labelled input data, and gradually adjusting the weights of the synapses until a desired network output is achieved.

SNNs can be directly applied to pattern recognition and sensor data fusion, relying on the principle that amplitude-domain, time-domain, and frequency-domain features in an input signal can be encoded into unique spatial- and temporal-coded spike sequences.

Neuromorphic SNN emulators, e.g. systems containing electronic analog/mixed-signal circuits that mimic neuro-biological architectures present in the nervous system, form distributed (in a non-von Neumann sense, i.e. computational elements and memory are co-localized, resulting in memory storage and complex nonlinear operations being simultaneously performed by the neurons in the network), parallel, and event-driven systems offering capabilities such as adaptation (including adaptation of physical characteristics, firing frequency, homeostatic (behavioural) regulation, et cetera), self-organization, and learning.

The distinctive feature of a robust neuromorphic system's output is the tuned excitability of designated neurons, in combination with circuit-level interactions that preserve correct (i.e. within bounds or definitions imposed by the learning rule used, or frequency of operation) temporal coordination/phasing of these neurons. Examples of circuit-level interactions are circuits that mimic/model brain biochemical (Na-, K-, Ca-) mechanism and impact on neuron firing and frequency adaptation.

Complexity and computational capabilities of SNNs are assessed through their dynamics, in particular, the spatial localization and the temporal variations of their activity. The dynamics (and architecture formulation) of an SNN can be fitted, with temporal encoding, to conventional (ANN) connectionist models, e.g. multilayer feedforward networks or recurrent networks.

Nevertheless, since SNNs inherent characteristics are decidedly different from conventional networks, they do not have to adhere to the rigid schemes related to these conventional networks.

However, at present there is no practical mapping methodology that presents the user of an SNN with an adapted and trained SNN, or part thereof, that can be utilized in the classification or further processing of a particular pre-determined frequency range the user might be interested in. Conventional SNN mapping do not offer efficient mechanisms for control/synchronization of the network transient dynamics and, consequently, limit network capabilities to acquire, be sensitive to, or filter out selected frequencies of the input signal, in effect preventing the network to fully exploit frequency content within spatio-temporal spike trains.

For example, when processing radar-, lidar-, image-, or sound signals, or any other application where the signal can be represented in the frequency domain, the signal consists of different frequency ranges encoding certain information. Processing specific frequency ranges within the frequency domain using a SNN, and enabling high-level of network modularity and granularity with synchronized behaviour of network subgroups would greatly enhance the practical implementation possibilities of SNNs in terms of cost-effectiveness, adaptability, extendibility, and reliability.

### SUMMARY

To address the above discussed drawbacks of the prior art, there is proposed a method and a system for processing a signal with a spiking neural network as set out in the appended set of claims.

In embodiments, the spiking neural network comprises a drive local cluster, which comprises a set of the spiking neurons and a plurality of synaptic elements interconnecting the set of the spiking neurons, such that an output signal of the drive local cluster serves as an input signal to the response local cluster such that the drive local cluster and the response local cluster are coupled with a particular coupling strength, wherein the method further comprises setting the network state within the response local cluster to have a steady-state when the particular coupling strength is smaller than a predetermined coupling strength.

In embodiments, a stochastic distribution activity or statistical parameter of the set of neurons within the response local cluster is stationary or non-stationary when the particular coupling strength is smaller than the predetermined coupling strength.

The steady-state is a solution of the equation: $EK {\left(t\right)}_{∝} + K {\left(t\right)}_{∝} {E}^{T} + {FF}^{T} = 0 ;$ with *K*(*t*)_{∝} the steady-state value of the auto-correlation function *K*(*t*) of the synaptic drive Γ(*t*), *F*(*t*) the deterministic function of the stochastic part of the synaptic drive Γ(*t*) as given by the formula: $Γ \left(t\right) = Φ \left(t, {t}_{0}\right) Γ \left({t}_{0}\right) + {\int }_{{t}_{0}}^{t} Φ \left(t, τ\right) F \left(τ\right) dω \left(τ\right) ,$ with Φ(*t*,*τ*) the state-transition matrix of the synaptic drive Γ(*t*) of all neurons within the response local cluster and *dω* an infinitesimal stochastic change, and E(t) the deterministic function defined by *dΦ(t, τ*)/*dt = E*(*t*)Φ(*t, τ*)*.*

The time-varying state may be a solution of the matrix equation: ${P}_{r} K \left({t}_{r}\right) + K \left({t}_{r}\right) {P}_{r}^{T} = - {Q}_{r} {Q}_{r}^{T}$ which is the continuous-time algebraic Lyapunov matrix equation of the differential Lyapunov matrix equation *dK*(*t*)/*dt = E*(*t*)*K*(*t*) *+ K*(*t*)*E*(*t*)*^{T} + F*(*t*)*F*(*t*)*^{T},* with Pᵣ and Qᵣ discretized versions of E and F and where tᵣ signifies a numerical integration time point.

In this way, an effective, extendible and reliable method is obtained for configuring the spiking neural network, and the local cluster in particular, to obtain the steady-state.

In embodiments, an increase in a structure dimensionality of the response local cluster is realized by ensuring generalized outer synchronization between the drive local cluster and the response local cluster, wherein generalized outer synchronization is the coupling of the drive local cluster to the response local cluster by means of the particular coupling strength being equal to or larger than the predetermined coupling strength.

In this way, for example a high-level of network modularity and granularity with synchronized behaviour of network subgroups is obtained, which enhances the practical implementation possibility of SNNs in terms of adaptability and extendibility.

In a further embodiment, the generalized outer synchronization is ensured based on the average autocorrelation function 1/N×{Σ E[*Γ*(*t*+*τ*/2)*Γ*(*t*-*τ*/2)^{T}]} of the synaptic drive *Γ*(*t*) with *τ* the delay, N the number of neurons in the response local cluster, where the average is over the neuron population.

In a further embodiment, the steady-state numerical solution is obtained by using feedback connections between the neurons in the response local cluster that results in the synchronization of neuronal activity of the neurons.

In a further embodiment, the drive local cluster is an input encoder of the spiking neural network which transforms a sampled input signal into spatio-temporal spike trains that are subsequently processed by the response local cluster.

### BRIEF DESCRIPTION OF DRAWINGS

Embodiments will now be described, by way of example only, with reference to the accompanying schematic drawings in which corresponding reference symbols indicate corresponding parts, and in which:
FIG. 1 shows an exemplary neural network, consisting of neurons and synaptic elements;
FIG. 2 shows schematically a spiking neural network within a microcontroller integrated circuit;
FIG. 3 shows schematically an exemplary run-time physical signal to inference signal processor with adaptive spiking neural network;
FIG. 4 shows nominal values of a spike adaptation mechanism in the leftmost two graphs, the reset and refractory period mechanism to model sodium and potassium conductance activation and inactivation dynamics in the middle two graphs, and inserted variability in the spike-generation in the rightmost graph;
FIG. 5 shows a network with different synchronized cell assemblies;
FIG. 6 shows in the top graph a voltage trace of analog neurons, in the middle the synaptic activation, and on the bottom synchronization and homeostatic regulation;
FIG. 7 shows at the top a non-regulated state, and on the bottom a regulated state, the two graphs on the left show activity of individual neurons through time, the two graphs on the right show network activity of the (non-)regulated network.

The figures are intended for illustrative purposes only, and do not serve as restriction of the scope or the protection as laid down by the claims.

### DESCRIPTION OF EMBODIMENTS

Hereinafter, certain embodiments will be described in further detail. It should be appreciated, however, that these embodiments are illustrative only and may not be construed as limiting the scope of protection for the present disclosure.

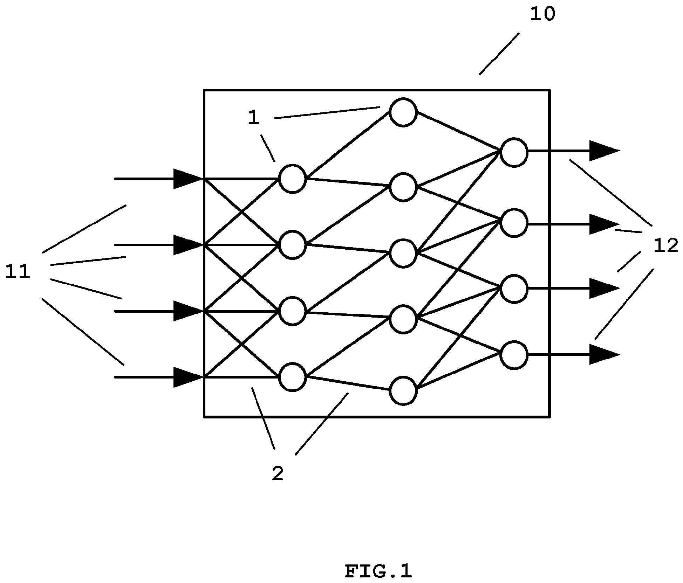

FIG. 1 is a simplified diagram of a neural network 100. The neurons 1 are connected to each other via synaptic elements 2. In order to not clutter the drawing, only a small number of neurons and synaptic elements are shown (and only some have a reference numeral attached to them). The connecting topology shown in FIG. 1, i.e. the way in which the synaptic elements 2 connect the neurons 1 with each other, is merely an example and many other topologies may be employed. Each synaptic element 2 can transmit a signal to an input of a neuron 1, and each neuron 1 that receives the signal can process the signal and can subsequently generate an output, which is transmitted via further synaptic elements 2 to other neurons 1. Each synaptic element 2 has a certain weight assigned to it, which is applied to each synaptic input signal that the synaptic element receives and transmits, to produce a weighted synaptic output signal. The weight of a synaptic element is thus a measure of the kind of causal relationship between the two neurons 1 that are connected by the synaptic element 2. The relationship can be causal (positive weight), anti-causal (negative weight) or non-existent (zero weight).

The neurons 1 and synaptic elements 2 can be implemented in hardware, for example using analog circuits or circuit elements or digital hardwired logic circuits or circuit elements, or a combination of these. For example, each neuron and each synaptic element may be implemented as a hardware circuit or circuit element. This type of hardware implementation may also include functions performed using software, so that the neurons and synaptic elements are implemented partly in hardware and partly in software, i.e. with the hardware circuits executing software to perform the functions of the individual neurons and synaptic elements. This is in contrast to a design using a large processor executing software where the software mimics individual neurons and synaptic element. These (partly) hardware implementations can achieve much faster processing of input signals, e.g. they enable much faster pattern recognition, and event-driven processing in which blocks of neurons and synaptic elements are only activated when needed.

The neural network 100 can be a spiking neural network. The neurons 1 are then spiking neurons, which generate a neuron output signal in the form of one or more spikes or neuron generated events. The spiking neurons 1 may be configured to fire (i.e. generate an output spike) only when a membrane potential (e.g. an energy potential, or voltage or current level) within the neuron reaches a predetermined threshold value. The membrane potential of the spiking neuron changes as a result of the received input signals, i.e. the synaptic output signals received by the neuron from the synaptic elements are accumulated, integrated, or otherwise processed to alter the membrane potential. When a weight of a synaptic element 2 is positive, a synaptic output signal received from that synaptic element excites the spiking neurons 1 which receive the signal, raising their membrane potentials. When a weight of a synaptic element 2 is negative, a synaptic output signal received from that synaptic element inhibits the spiking neurons 1 which receive the signal, lowering their membrane potentials. When a weight of a synaptic element 2 is zero, a synaptic output signal received from that synaptic element does not have an effect on the membrane potential of the spiking neurons 1 which receive the signal.

When the membrane potential of a spiking neuron 1 reaches the threshold value, the neuron fires, generating a spike at the time of firing, and the membrane potential is reduced as a result of the firing. If the membrane potential subsequently again reaches the threshold value, the neuron will fire again, generating a second spike. Each spiking neuron 1 is thus configured to generate one or more spikes in response to input signals received from the connected synaptic elements 2, the spikes forming a spatio-temporal spike train. Since a spiking neuron 1 only fires when its membrane potential reaches the predetermined threshold value, the coding and processing of temporal information is incorporated into the neural network 100. In this way, spatio-temporal spike trains are generated in the spiking neural network 100, which are temporal sequences of spikes generated by the spiking neurons 1 of the network 100.

The temporal characteristics of the spike trains encode amplitude and frequency features of the input signal. These temporal characteristics comprise: the latency between onset of stimulus (e.g. an input signal from a synaptic element) and generation of a spike at the output of a neuron; the latency between successive spikes from the same neuron; and the number of spikes fired by the neuron in the time duration for which the input stimulus is applied.

The synaptic elements 2 can be configurable such that for example the respective weights of the synaptic elements can be varied, for example by training the neural network 100. The neurons 1 can be configurable in the way they respond to a signal from a synaptic element. For example, in the case of spiking neural networks, the neurons 1 can be configured in the way a certain signal increases or decreases the membrane potential, the time it takes for the membrane potential to naturally decay towards a resting potential, the value of the resting potential, and/or the threshold value that triggers a spike of the spiking neuron 1. The configuration of the neurons 1 can for example be kept constant during training, or be variable and set by training the neural network 100 using a particular training set.

Input signals 11 may be, for example, multiple, disparate, sampled input signals, or spatio-temporal spike trains. The input can be an analog-to-digital converted value of a signal sample, or the digital value of the sample in the case of for example an analog or digital integrator, or the analog value of the sample in the case of an analog integrator.

Output signals 12 of the neural network 100 are for example spatio-temporal spike trains, which can be read out from the output neurons 1 and further classified and transformed by an output transformation stage into a set of digital values corresponding to the type of output code selected by the user.

Biological SNNs can be characterized by sparse and irregular inter-neuron connections with a low average activity, where only active neurons are contributing to information processing. Examples of sparse inter-neuron connections are the formation of local clusters of neurons, short or long path loops and synchronized cell assemblies.

A local cluster, also referred to as a cell assembly, denotes a group of neurons and the synaptic elements interconnecting the neurons, with strong shared excitatory inputs. The neurons in such a local cluster tend to be operationally activated as a whole group when a sufficient subset of its neurons is stimulated. In this way, the local cluster can be considered as a processing unit. An association between the neurons of the local cluster, i.e. a possible mechanism by which to define the cluster, may take different forms.

A synchronized response of a group of neurons is one example defining a local cluster of neurons. One example of interest is the time-variant (cyclo-) periodic activation of neurons in a local cluster in response to a stimulus. Other possible mechanisms on which to define a local cluster could be built-in redundancy (i.e. additional circuits/neurons to insure fail safe operation), averaging (i.e. the final result is an average of multiple neurons and not a single one), layer definitions (a layer can be defined, among others, based on the network concepts and layer sizes, and the network depth), etc. SNNs behave as complex systems, defined through the complex dynamic interactions between the neurons, e.g. the communication between neurons within a local cluster or the communication between different local clusters.

If synchronized activation of neurons is used as the mechanism for forming local clusters, then consequently, short term memory (STM) may be expressed as a persistent activity of the neurons in local cluster sustained by reverberations (i.e. periodic activation of the neurons), while long term memory (LTM) corresponds to the formation of new local clusters, e.g. by plasticity mechanisms or other learning methods. Within this framework, the synchronization of firing times for groups of neurons is examined, as a succession of synchronized firing by specific subsets of neurons, as collective synchronization of specific subsets of neurons offering spatio-temporal integration, and as the extended notion of polychronization within a subset of neurons.

A synchronized neuron response can be defined here as the correlated occurrence in time of two or more events associated with various aspects of neuron activity. This synchronization may take the form of synchronized firing rates and/or firing times of subsets of neurons at or around a particular frequency. Multiple subsets of neurons can each be synchronized at different frequencies, reflecting the role of these subsets for learning/memory forming, or some other pre-defined signal processing function, such as filtering. Local clusters may be formed by polychronization, the self-organization of groups of neurons in the SNN into local clusters that exhibit reproducible, time-locked patterns of spiking activity as a result of synaptic strengthening.

Neurons within a local cluster may have a synchronized neuron response so that the neurons fire (i.e. generate an output spike) in a synchronized manner. This synchronized response may take different forms. The neurons of the local cluster may fire periodically at the same time and the same rate in a repeating cycle at a certain oscillation frequency.

There may be some variation in the output spike timing and rate over time, e.g. the oscillation frequency may be substantially constant or may reduce or increase over time. There may be some variation in the output spike timing and rate among the neurons of the local cluster, so that the firing times of a certain neuron falls within a certain time window of the peaks of neuron firing at the oscillation frequency, i.e. the peaks of the oscillation cycle when the largest number of neurons fire. This distribution of times of spike firing for the neurons within the local cluster may follow a Gaussian curve or comparable statistical distribution (e.g. lognormal, Poisson, exponential, etc.), with the largest number of output spikes occurring at the oscillation frequency and progressively fewer spikes occurring further and further from the peaks. The designated time window can be seen as a time range within an oscillation period where an input signal has the largest effect on the local cluster which is oscillating at the predetermined frequency.

The local cluster as a whole may exhibit synchronized periodic neuron firing as described herein. This may occur due to all neurons of the local cluster firing periodically, or less than all neurons firing periodically but with for example a mean spiking activity of the local cluster following a synchronized periodic behaviour as described herein. Here mean spiking activity is the average activity of the local cluster within a particular time range. The mean spiking activity may increase or decrease over multiple predetermined oscillation periods. This is an example of frequency or rate-based coding. It is assumed that most, if not all, information about the stimulus is contained in the firing rate of the neuron. Since the sequence of action potentials generated by a given stimulus varies from trial to trial, neuronal responses are typically treated statistically or probabilistically.

When the local cluster is not oscillating in a synchronous manner, but for example waiting for an input signal, the neurons within the local cluster will be more responsive to the input signals, if these input signals arrive sequentially on the predetermined-frequency that the local cluster is sensitive to.

Other examples of suitable encodings are temporal or latency or time-to-first-spike encoding, and, alternatively, rank-order encoding. The former is related to relative timing of spikes, interaural delay times or the timing differences between spikes. The latter examine not the precise timing information, but only the order in which the spikes arrive.

In general, one can look for example at the activity of a statistical parameter or a stochastic distribution related to the neurons within the local cluster. One example of a statistical parameter is thus the mean spiking activity. In the case of a probability distribution, e.g. when a neuron in the local cluster spikes, one can look for example at the first moment (the expected value), the second central moment (the variance), the third standardized moment (the skewness), and the fourth standardized moment (the kurtosis).

Synaptic delay, i.e. the time necessary for the conduction of a signal across a synaptic element, is an elementary quantity required for transitions in the oscillatory/transient dynamics and, consequently, coherent and incoherent states of SNNs. Noise, either in the form of stochastic input, or inhomogeneity in the intrinsic firing frequencies, decreases the coherence of oscillations between neurons. Oscillations here are rhythmic or repetitive patterns of neural activity in a SNN. Neurons can generate oscillatory activity in many ways, driven by mechanisms within individual neurons or by interactions between neurons. In individual neurons, oscillations can appear either as oscillations in membrane potential or as rhythmic patterns of action potentials, which then produce oscillatory activation of post-synaptic neurons. At the level of local clusters, synchronized activity of large numbers of neurons can give rise to oscillations within the local cluster. Oscillatory activity in groups of neurons may arise from feedback connections between the neurons that result in the synchronization of their firing patterns. Oscillation and associated oscillatory activity is one of the concepts used to analyse spike train properties such as rate, spike coincidences, and the presence of other temporal patterns.

The role of synchronization depends on oscillation frequency, e.g. synchronization of lower-frequency oscillations (used on a local level) might establish transient networks that implement specific processes (learning, adaptation, STM/LTM, et cetera), while synchronization of higher-frequency oscillations (used on a global level) could communicate information about the process outcomes, e.g. cross-frequency modulation of either power or phase-locking. In such a cross-frequency modulation, a first cell assembly is modulating a second cell assembly by a certain modulation method, for example cross coupling two oscillators through a feedback loop, modulation of high-frequency amplitude by low-frequency phase, et cetera. The overall coupling strength defines whether a network will operate in a stable or a chaotic regime of activity. Stronger heterogeneities habitually lead to states that are very different from synchrony and sometimes completely asynchronous with no apparent coordination of spike times. A higher coupling strength in general leads to more synchrony. Information transmission and signals integration through synchronization offers high level of cost-effectiveness, adaptability, extendibility, and reliability of spiking neural networks.

Neurons communicate in the network predominantly through fast all-or-none events, i.e. spikes in the membrane electric potentials of the neurons. The relative spike firing times in a neuron population are seen as the information code carried by the network, and synchronization between neuron populations as a signal to encode and decode information. Neuron characteristics and associated variables describe neuron states (for example describing the time course of the membrane potential). Information to be encoded can for example be represented by these neuron states. When a neuron or populations of neurons oscillate and are synchronized, each of these variables can also oscillate with the same frequency and return to the same value once every oscillatory period, where one such oscillation of (for example, membrane potential) corresponds to a spike with its subsequent interspike interval.

Next, an implementation of a mapping methodology that optimizes temporal dynamics of stochastic cell assemblies and allows the synchronization of cell assemblies that enhance information transmission with the spiking neural network will be described.

A (possibly discontinuous) function *fⱼ*(.) (this is non-linear transformation; for mathematical convenience it is modelled as *φ*(*x*) = tanh(*x*), although other choices of *φ* are possible) is used to designate the input-output transfer function that transforms excitations(/inhibition) voltage *vⱼ^{E}*(.) (resp., *vⱼ^{I}*(.)) across the membrane of the *j*-th neuron into firing rates (in Hz) of the *j*-th neuron. The superscripts E and I respectively mean excitatory and inhibitory, and are related to excitatory or inhibitory neurons respectively. Consequently, a voltage *v*ᵢ(t) in the receiving or postsynaptic i-th neuron is given by: $\begin{matrix}{v}_{i}^{E} \left(t\right) = {\sum }_{j = 1 , j \neq i}^{{n}_{E}} {w}_{ij}^{EE} {\int }_{- ∞}^{t} {α}_{j}^{E} \left(t-τ\right) {f}_{j} \left({v}_{j}^{E}\left(τ\right)\right) d τ + \\ {\sum }_{j ′ = 1}^{{n}_{I}} {w}_{ij ′}^{EI} {\int }_{- ∞}^{t} {α}_{j ′}^{I} \left(t-τ\right) {f}_{j ′} \left({v}_{j ′}^{I}\left(τ\right)\right) d τ + {v}_{th , i}^{E} \left(t\right)\end{matrix}$ (1) $\begin{matrix}{v}_{i}^{I} \left(t\right) = {\sum }_{j = 1}^{{n}_{E}} {w}_{ij}^{IE} {\int }_{- ∞}^{t} {α}_{j}^{E} \left(t-τ\right) {f}_{j} \left({v}_{j}^{E}\left(τ\right)\right) d τ + \\ {\sum }_{j ′ = 1 , j ′ \neq i}^{{n}_{I}} {w}_{ij ′}^{II} {\int }_{- ∞}^{t} {α}_{j ′}^{I} \left(t-τ\right) {f}_{j ′} \left({v}_{j ′}^{I}\left(τ\right)\right) d τ + {v}_{th , i}^{I} \left(t\right)\end{matrix}$ (2) where *i* ∈ {1,... *,n_{E}*} and *i'* ∈ {1,... ,*n_{I}*} are indexes denoting the firings of the excitatory and inhibitory transmitting (i.e. presynaptic) neurons at firing times *tⱼ* and *t_{j'},* respectively. The number of the excitatory and inhibitory transmitting neurons is denoted as *n_{E}* and *n_{I},* respectively, and *αⱼ^{E}*(.) and *αⱼ^{I}*(.) are the functions describing the evolution of the excitatory and inhibitory postsynaptic potentials, respectively. Further, *v_{th,i}^{E}*(.) and *v_{th,i}^{E}*(.) are continuous threshold input voltages, which designate constant input, i.e. extrinsic contribution, to the membrane potential, which could be an external stimulation voltage. A threshold voltage is a voltage which a membrane potential needs to reach so that the corresponding neuron can spike; when the threshold is met, the neuron fires in case of excitatory neurons, or leads to inhibition of action potential generation in a postsynaptic (inhibitory) neuron cell. The entries of neuronal connectivity matrix *wᵢⱼ* represent the coupling strength of the *j*-th neuron on the i-th neuron.

The excitatory and the inhibitory population interaction - by virtue of the cross-terms in the above formulae (1) and (2) - can lead to full synchronous states or partial synchronization constructs, which can be enhanced by increasing the inhibitory dynamics. In heterogeneous inhibitory networks with sparse random connectivity, inhibition dynamics offer duality in both suppressing the population activity, and producing a neural reactivation. When a network is saturated, the network will not be able to properly process incoming signals. Through neural reactivation the network will be able to be responsive again to incoming signals. The concept of inhibition entails among other interruption or blockade of activity and restriction of activity patterns in both space and time in the network. Inhibitory interneurons, however, do not offer only stop signals for excitation; operational dynamics in neuronal networks can only be maintained if the excitatory forces are counteracted by effective inhibitory forces.

Synchronization of spike transmissions within a circuit occurs when inputs from the excitatory neurons to the adjacent inhibitory neurons are sufficiently strong. The coupling strength is controlled by inhibitory innervation: when the inhibitory input is present, i.e. intermediate coupling, the neurons spike with diminutive rhythmicity/synchrony. The inhibitory spike-time dependent plasticity (STDP) function of equation (6) below is symmetrical, assisting a decrease in synaptic conductance; in contrast, the excitatory STDP function is anti-symmetric and biased towards potentiation action.

The function *τ*(*t*) in the above equation is a bounded differential function of time *t,* for which the following conditions are satisfied: $r = {max}_{t ∈ ℝ} \left\{τ\left(t\right)\right\} , 0 \leq \dot{τ} \left(t\right) \leq h$ (3) where *r* and *h* are positive constants. Assuming ${α}_{i}^{\left(E, I\right)} \left(t\right) = {B}^{\left(E, I\right)} {e}^{- t / {λ}_{i}^{\left(E, I\right)}}$*,* where *λᵢ*^{(E,I)} is the gain - which regulates exponential decay of the synaptic voltages and mimics a spike-time dependent scaling of the input conductance - one can define the synaptic drive of the (excitatory or inhibitory) post-synaptic i-th neuron by ${Γ}_{i}^{\left(E, I\right)} \left(t\right) ≙ {\int }_{- ∞}^{t} {α}_{i}^{\left(E, I\right)} \left(t-τ\right) {f}_{i} \left({v}_{i}^{\left(E, I\right)}\left(τ\right)\right) d τ$ (4)

The synaptic drive essentially denotes the synaptic strength. The synaptic drive Γ*ᵢ* of a neuron i can be seen as the total transfer function of all synaptic elements that drive the neuron i, it can be a function of for example the exponential decay value, weight and gain of the synaptic elements that drive the neuron i et cetera. From (1), (2) and (4) it follows that ${dΓ}_{i} \left(t\right) / dt = - \frac{1}{{τ}_{i}} {Γ}_{i} \left(t\right) + {λ}_{i} {f}_{i} \left({\sum }_{j = 1 , j \neq i}^{n} {w}_{ij} {Γ}_{j} \left(t\right) + {v}_{th , i} \left(t\right)\right)$ (5)

If one considers the case, which includes spike-timing dependent plasticity (STDP) learning and long-term plasticity (LTP), one obtains the following bounds and changes: $\begin{matrix}1 / {τ}_{i} = {\sum }_{j = 1}^{n} \left|{w}_{ij}\right| > 0 , {v}_{th , i} \geq 0 , 1 \leq i \leq n \\ w \to w \left(1-δw\right) ; δw = {a}_{LTP} {e}^{- \left({t}_{post}-{t}_{pre}\right) / {τ}_{LTP}} ; {ift}_{post} > {t}_{pre} \\ {a}_{LTP +} \left({w}_{j}\right) = \left({w}^{max}-{w}_{j}\right) {η}_{+} ; {a}_{LTP -} \left({w}_{j}\right) = {w}_{j} {η}_{-}\end{matrix}$ (6) where *η₊* and *η₋* are soft bounds, i.e. for large weights, synaptic depression dominates over potentiation.

Neurons are noisy, both in the generation of spikes and in the transmission of synaptic signals. The noise originates from the quantal releases of neural transmitters, the random openings of ion channels, the coupling of background neural activity, et cetera. Subsequently, the noise induces neuronal variability, increasing the neuron sensitivity to environmental stimuli, influencing synchronization between neurons, and facilitating probabilistic inference.

The elements *wᵢⱼ* of the connectivity matrix are drawn from a Gaussian distribution with correlation [*wᵢⱼwⱼᵢ*]*_{J}*=*ρ* with the square brackets [·]*_{J}* designating an average over realizations of the random connections. The parameter *ρ* quantifies the degree of symmetry of the connections, i.e. for *ρ* = 0 the elements *wᵢⱼ* and *wⱼᵢ* are independent and the connectivity matrix is fully asymmetric; for *ρ =* 1 the connectivity matrix is fully symmetric; for *ρ*=-1, it is fully antisymmetric. Degree of symmetry can be employed to observe the evolution of a specific network configuration, i.e. how likely it is that the configuration is the result of chance.

Subsequently, the definition of the generalized outer synchronization of the stochastic neural networks with time-varying delays can be extended with ${dΓ}_{x , i} \left(t\right) / dt = - \frac{1}{{τ}_{i}} {Γ}_{x , i} \left(t\right) + {λ}_{i} {f}_{i} \left({\sum }_{j = 1 , j \neq i}^{n} {w}_{ij} {Γ}_{x , j} \left(t\right) + {v}_{th , i} \left(t\right)\right)$ (7) $\begin{matrix}{dΓ}_{y , i} \left(t\right) / dt = - \frac{1}{{τ}_{i}} {Γ}_{y , i} \left(t\right) + {λ}_{i} {f}_{i} \left({\sum }_{j = 1 , j \neq i}^{n} {w}_{ij} \left({Γ}_{y , j}\left(t-τ\right)\right) + {v}_{th , i} \left(t\right)\right) + \\ {u}_{i} \left(t\right) + {σ}_{i} \left({ε}_{i}\left(Γ\left(t\right)\right),{ε}_{i}\left(Γ\left(t-τ\right)\right),t\right) dω \left(t\right)\end{matrix}$ (8) where *x* and *y* represent distinctive cell assemblies or local clusters, i.e. the *x* network forms the drive network, and the y network forms the response network. The drive network *x* thus drives the response in the response network *y*. The cell assembly y experiences perturbations. The cell assemblies can be situated directly adjoined to one another, i.e. at least one output neuron of the drive network *x* can be directly connected to at least one input neuron of the response network y. The cell assemblies *x* and *y* can for example be located in distinct layers or the same layer of the network, or they can be separated by pieces of hardware that couple two spiking neural networks such as to form effectively a single spiking neural network. The time-dependent function *ω*(*t*) describes noise in the input voltage and is represented by Brownian motion, i.e. an n-dimensional standard Wiener process. We assume that the noise intensity function *σᵢ*(*x,y,t*) satisfies the Lipschitz condition and there exists positive constants *p, q* such that trace(*σᵢ*^{T}*σᵢ*) ≤ *px^{T}x+qy^{T}y.* With selective stimulation of neurons, we can target several specific neural network traits, such as the excitation/inhibition balance, network dynamics and executed computations. Here the excitation/inhibition balance refers to the fact that neurons can operate optimally in a (sparse) coincidence detection regime, i.e. the majority of the synapses are excitatory and firing rates are low; and a balanced regime, with approximately balanced excitation and inhibition, and with high output firing rates.

When perturbations occur, neuronal computational elements create a spike based on the perturbation sign, intensity and phase, i.e. a cluster of coupled neurons (cell assembly) can retain phase differences resulting from cluster correlated inputs. One can note that if the frequency response is altered, each neuron adjusts the phases of spiking. The adaptive controller *uᵢ*(*t*) for node *i* is expressed as ${u}_{i} \left(t\right) = J \left(\begin{matrix}{B}_{i} \left(\left({Γ}_{x , i}\right)\right) \left({dΓ}_{x , i}\left(t\right)/dt\right) - \\ {λ}_{i} {f}_{i} \left({\sum }_{j = 1 , j \neq i}^{n} {w}_{ij} \left({B}_{j}\left({Γ}_{x , j}\left(t-τ\right)\right)\right) + {v}_{th , i} \left(t\right)\right)\end{matrix}\right) - {kε}_{i}$ (9) where *J(Bᵢ*(.)) is the Jordan matrix of the vector function *Bᵢ*(*Γ_{x,i}*), *εᵢ=yᵢ*(*t*)*-Bᵢ*(*Γ_{x,i}*(*t*)) is the synchronization error, and *k* is a sufficiently large positive constant. The adaptive controller is thus used to control the synaptic drive of neurons within the response network y, such that the synchronization error between the drive network *x* and the response network y is diminished. In this way synchronization occurs between the drive network *x* and the response network y. As mentioned above, the overall coupling strength u defines whether a network will operate in a stable or a chaotic regime of activity. Stronger heterogeneities, e.g. cell assembly *x* and cell assembly y do not oscillate at the same frequency, habitually lead to states that are very different from synchrony and sometimes completely asynchronous with no apparent coordination of spike times. A higher coupling strength in general leads to more synchrony.

In this way, an increase in cell assembly y's structure dimensionality (an increase in the amount of neurons that are synchronized in the cell assembly y) by ensuring generalized outer synchronization of stochastic neural networks based on the average autocorrelation function is described. This description provides a mechanism that is robust against inhomogeneities, sparseness of the connectivity, and noise.

Next, one can formulate (8) as a system of linear stochastic differential equations in standard form as $dΓ = E \left(t\right) Γdt + F \left(t\right) dω \left(t\right)$ (10)

The solution of (10) is given by $Γ \left(t\right) = Φ \left(t, {t}_{0}\right) Γ \left({t}_{0}\right) + {\int }_{{t}_{0}}^{t} Φ \left(t, τ\right) F \left(τ\right) dω \left(τ\right)$ (11) where Φ(*t*,*τ*) is the state-transition matrix, describing the time-evolution of the dynamical system between times *τ* and *t,* determined as a function of *t* as the solution of dΦ(*t,τ*)/d*t*=*E*(*t*)Φ(*t,τ*), Φ(*τ*,*τ*)=Iₘ. Solving equation (11) involves a stochastic Itô integral. If the deterministic matrix functions *E*(*t*) and *F*(*t*) are bounded in the time interval of interest, there exists a unique solution for every initial value vector *Γ*(*t₀*).

The timing of neuronal spikes, e.g. neurons that spike coincidentally, with a well-defined time-lag between them, in addition to temporal coordination of neuronal output, convey information about the sensory input. Consequently, with coincident spiking internal states of the network can be correlated, specifically, synchronous groups of neuronal subpopulations, which represent perceptual content forming a coherent entity, such as for example a visual object in a scene.

The network activity can be described based on the average autocorrelation function (the autocorrelation function being the correlation of a signal with a delayed copy of itself as a function of delay) 1/N×{Σ E[*Γ*(*t+τ*/2)*Γ*(*t-τ*/2)^{T}]} of *Γ*(*t*) with *τ* the delay, where the average is over the neuron population. Defining *K(t)* as the autocorrelation matrix of *Γ,* i.e. E[*Γ*(*t+τ*/2)*Γ*(*t-τ*/2)^{T}] and using Itô's theorem on stochastic differentials, and, subsequently taking expectation of both sides, we obtain a differential Lyapunov matrix equation: $dK \left(t\right) / dt = E \left(t\right) K \left(t\right) + K \left(t\right) E {\left(t\right)}^{T} + F \left(t\right) F {\left(t\right)}^{T}$ (12) for which the analytical solution has the form $K \left(t\right) = Φ \left(t, 0\right) {K}_{0} Φ {\left(T, 0\right)}^{T} + {\int }_{0}^{T} Φ \left(t, τ\right) F \left(τ\right) F {\left(τ\right)}^{T} Φ {\left(t, τ\right)}^{T} d τ$ (13)

At the steady-state, equation (12) is expressed as $EK {\left(t\right)}_{∝} + K {\left(t\right)}_{∝} {E}^{T} + {FF}^{T} = 0$ (14) where subscript ∝ designates the steady state value and E and F the deterministic matrix functions *E(t)* and *F(t).* The steady-state signifies a state of the network with settled behaviour, i.e. recently observed behaviour of the system will continue into the future. In stochastic systems in a steady-state, the probabilities that various states will be repeated will remain constant. A steady-state appears for example when the network is in an idle state, using only direct current. The steady-state covariance function is obtained as follows if t≤t': $\begin{matrix}E \left[Γ\left(t\right){Γ}^{T}\left(t′\right)\right] = {\int }_{- ∞}^{t} exp \left(E\left(t-τ\right)\right) {FF}^{T} exp {\left(E\left(t′-τ\right)\right)}^{T} d τ \\ = {\int }_{- ∞}^{t} exp \left(E\left(t-τ\right)\right) {FF}^{T} exp {\left(E\left(t-τ\right)\right)}^{T} d τ exp {\left(E\left(t′-t\right)\right)}^{T} \\ = {K}_{∞} exp {\left(E\left(t′-t\right)\right)}^{T}\end{matrix}$ (15) and if t>t' as: $\begin{matrix}E \left[Γ\left(t\right){Γ}^{T}\left(t′\right)\right] = {\int }_{- ∞}^{t ′} exp \left(E\left(t-τ\right)\right) {FF}^{T} exp {\left(E\left(t′-τ\right)\right)}^{T} d τ \\ = exp \left(E\left(t-t′\right)\right) {\int }_{- ∞}^{t ′} exp \left(E\left(t-τ\right)\right) {FF}^{T} exp {\left(E\left(t′-τ\right)\right)}^{T} d τ \\ = exp \left(E\left(t-t′\right)\right) {K}_{∞}\end{matrix}$ (16)

To obtain a numerical solution, equation (12) has to be discretized in time using a suitable scheme, such as any linear multi-step method (e.g. the trapezoidal method, the backward differentiation formula, or a Runge-Kutta method). Using the backward Euler (backward differentiation formula of order one), the differential Lyapunov matrix equation (12) can be written in a special form referred to as the continuous-time algebraic Lyapunov matrix equation ${P}_{r} K \left({t}_{r}\right) + K \left({t}_{r}\right) {P}_{r}^{T} = - {Q}_{r} {Q}_{r}^{T}$ (17)

Here, tᵣ=t₍ᵣ₋₁₎+hᵣ, where hᵣ are the numerical integration time steps. At each time point tᵣ, numerical methods can compute an approximation to the exact solution. Furthermore, matrices Qᵣ and Pᵣ are discretized (in time) versions (numerical integration methods) of deterministic matrix functions E and F respectively.

If *Pᵣ* is sparse and large scale and if *Qᵣ* is of low-rank, we solve equation (17) with Krylov-type methods. We compute a low-rank solution by determining $U ∈ {ℝ}^{n \times m}$ and $O ∈ {ℝ}^{m \times m}$ , such that *K*(*tᵣ*)*=UOU^{T},* where *U* is an orthogonal matrix. Starting from ${U}^{T} \left({P}_{r}K\left({t}_{r}\right)\right) + \left(K\left({t}_{r}\right){P}_{r}^{T}\right) U = - {U}^{T} {Q}_{r} {Q}_{r}^{T} U$ (18) which leads to the reduced Lyapunov equation by using the orthogonality of U: $\left({U}^{T}{P}_{r}U\right) O + O {\left({U}^{T}{P}_{r}U\right)}^{T} = - {U}^{T} {Q}_{r} {Q}_{r}^{T} U$ (19)
an approximation is computed by the application of a Galerkin condition, i.e. given U we compute *O* by imposing the Galerkin orthogonality condition *U*^{T}R(*UOU*^{T})*U*=0, where *R*(*UOU*^{T}):=*Pᵣ*(*UOU*^{T})+(*UOU*^{T})*Pᵣ*^{T}+*QᵣQᵣ^{T}* is the residual associated with *UOU*^{T}*.*

This is a small dense Lyapunov equation which can be solved directly, for example with the Bartels-Stewart method. For dense *Pᵣ*, we solve equation (17) with a low rank version of the iterative method, which is related to rational matrix functions. The postulated iteration for the Lyapunov equation (17) for i = *1,2*, ... is given by K(0) = 0 and $\begin{matrix}\left({P}_{r}+{γ}_{i}{I}_{n}\right) {K}_{i - 1 / 2} = - {Q}_{r} {Q}_{r}^{T} - {K}_{i - 1} \left({P}_{r}^{T}-{γ}_{i}{I}_{n}\right) \\ \left({P}_{r}+\overline{{γ}_{ι}}{I}_{n}\right) {K}_{i}^{T} = - {Q}_{r} {Q}_{r}^{T} - {K}_{i - 1 / 2}^{T} \left({P}_{r}^{T}-\overline{{γ}_{ι}}{I}_{n}\right)\end{matrix}$ (20) where *γᵢ* are the iteration shift parameters. For efficient implementation, one can replace iterates by their Cholesky factors, i.e., *Kᵢ=LᵢLᵢ^{H}* and reformulate in terms of the factors *Lᵢ.*

This thus gives us a mathematical description for time-varying solutions to equation (12). These are for example networks that do not show settled behaviour, and for which the activity of the neurons varies over time.

For periodic steady-state solutions (if there exists one) *E*(*t+kT*)=*E*(*t*) and *F(t+kT)=F(t)* for all *t,* and $k ∈ ℤ$, and for some period *T*>0. The initial condition *K*₀ for equation (12) satisfies equation (13) by setting *K*(*T*)=*K*₀ expressed as ${K}_{0} - Φ \left(T, 0\right) {K}_{0} Φ {\left(T, 0\right)}^{T} = {K}_{p} \left(T\right)$ (21) where ${K}_{p} \left(T\right) = {\int }_{0}^{T} Φ \left(t, τ\right) F \left(τ\right) F {\left(τ\right)}^{T} Φ {\left(t, τ\right)}^{T} d τ$ (22)
which can be calculated by numerically integrating equation (12) with an initial condition *K*(0)=0. Equation (21) is a system of algebraic linear equations for the entries of the matrix *K*₀, and equations of this form are usually referred to as discrete-time algebraic Lyapunov matrix equations due to their origin from Lyapunov stability theory for discrete-time systems. Equation (21) can be numerically solved with the Bartels-Stewart algorithm for the continuous-time algebraic Lyapunov matrix equation.

The above equations (14)-(16) thus described a steady-state numerical solution, equations (17)-(20) described a time-varying numerical solution, and finally equations (21)-(22) described a periodic steady-state numerical solution. These solutions describe a spiking neural network in terms of its network activity, i.e. a linearized solution describing the synaptic drive for each of the neurons in a cell assembly or other local cluster of the spiking neural network. A local cluster can adhere to the steady-state solution, the time-varying numerical solution and/or the periodic steady-state numerical solution dependent on the current state of the network.

Thus, in order to obtain synchronous oscillation within a spiking neural network, or within a subset of neurons, e.g. a cell assembly or other local cluster, within a spiking neural network, the network drive of the different neurons with synchronous oscillation behaviour has to adhere to equations (21)-(22). The synaptic drive of a specific neuron in a spiking neural network is tuneable by varying e.g.: the respective weights of the synaptic elements connected to the neuron, by configuring the way a certain signal increases or decreases the membrane potential of the neuron, by configuring the time it takes for the membrane potential of the neuron to naturally decay towards a resting potential, by changing the value of the resting potential of the neuron, and/or by changing the threshold value that triggers a spiking of the neuron.

Via an iterative process, using for example software, the parameters that define the value of the synaptic drive at specific instances in time can be optimized. This can be done via a simulation of the hardware, or directly via a hardware implementation and studying the output. Thus, the network can be trained in order for specific cell assemblies to adhere to the equations describing synchronous oscillation behaviour.

In other words, when the drive network *x* is oscillating at the pre-determined frequency and the response network y has been mapped to make it possible for the response network y to adhere to the equations (21)-(22) governing the periodic steady-state solution, and the connection strength between the drive network *x* and the response network y is strong enough, the response network y will oscillate in the manner governed by equations (21)-(22). The oscillation period is then the pre-determined oscillation period T. That means that a stochastic distribution activity or statistical parameter of the set of neurons within the response network *y* is cyclo-stationary at the frequency at which the drive network *x* is oscillating.

If the coupling strength is not strong enough, a stochastic distribution activity or statistical parameter of the set of neurons within the response network *y* can be stationary or non-stationary. The value of the coupling strength that makes the coupling between the drive network x and the response network y strong enough can be a pre-determined value such that a particular response to an input signal is obtained. This can be determined on an application-by-application basis.

The drive network *x* will in general be considered closer to the input signal coming from a sensor or other device that serves as input to the spiking neural network than the response network *y*. This is generally because before a spike train is processed by the response network *y*, it is processed by the drive network *x* so as to drive the response network y.

An input encoder transforms a sampled input signal into spatio-temporal spike trains. Each output neuron of the input encoder forms an output signal which is a temporal spike train. The input encoder is configured by a particular configuration, where for example the weights of the synaptic elements of the input encoder are set. Multiple input encoders can be used, their implementation divided over multiple frequency ranges of the input signal frequency domain.

The drive network *x* can be an input encoder. The drive network *x* can be connected to the input encoder, such that the spatio-temporal spike trains which are output signals of the input encoder are processed by the drive network and cause spatio-temporal spike trains in the drive network *x.* Since these spatio-temporal spike trains encode a particular frequency in the sampled input signal to the spiking neural network, the spatio-temporal spike trains will occur at a particular frequency in specific neurons of the drive network *x*. That means, the drive network *x* can oscillate at this particular frequency as well, although this is not necessary.

Since the drive network *x* and the response network *y* are coupled, the spatio-temporal spike trains processed by the drive network *x* will then be processed by the response network *y.* The response network *y* might become stationary, non-stationary, or cyclo-staionary as a result, i.e. a stochastic distribution activity or statistical parameter of the set of neurons within the response network *y* is stationary, non-stationary or cyclo-stationary.

The former two can be a result of either a weak coupling strength between the drive network *x* and the response network *y,* or the drive network *x* does not provide an input signal in the form of spatio-temporal spike trains at the predetermined frequency.

The latter result can thus be a result of a strong enough coupling strength between the drive network *x* and the response network *y,* and the drive network providing an input signal in the form of spatio-temporal spike trains at the predetermined frequency.

The frequency over which a synchronously oscillating cell assembly oscillates is a positive input constant and can be chosen based on which frequency the cell assembly needs to be sensitive to. In principal, any frequency that the local cluster is capable of oscillating at can be the predetermined frequency.

All neurons in a local cluster or cell assembly need not spike at exactly the same moment, i.e. fully synchronized. The probability of spiking may be rhythmically modulated such that neurons may be more likely to fire at the same time, which would give rise to oscillations in their mean activity. As such, the frequency of large-scale oscillations within the local cluster or cell assembly does not need to match the firing pattern of each individual neuron therein.

Neurons in a synchronized and oscillating local cluster or cell assembly may also spike within a certain time range of one another, e.g. all neurons spike within a time range that is 10 percent of the oscillation period, or within 1 percent of the oscillation period, or within 0.1 percent of the oscillation period, or within 0.01 percent of the oscillation period.

In general, the spiking neural network is first modified to meet its timing requirements. The local cluster can operate within a frequency range centred around the predetermined frequency, wherein the distance from the centre of the range can be three sigma variations. Other distances from the centre of the range could be one or two sigma variations. Next, the synchronization within a certain time range can be defined by the probability density functions in the manner above. Choosing a particular sigma then can result in a certain time range.

The number of neurons of the local cluster spiking within this certain time range may be equal to or upwards of 50 percent of the total number of neurons within the local cluster, more preferably equal to or upwards of 75 percent, more preferably equal to or upwards of 90 percent, more preferably equal to or upwards of 95 percent, more preferably equal to or upwards of 97.5 percent, more preferably equal to or upwards of 99 percent.

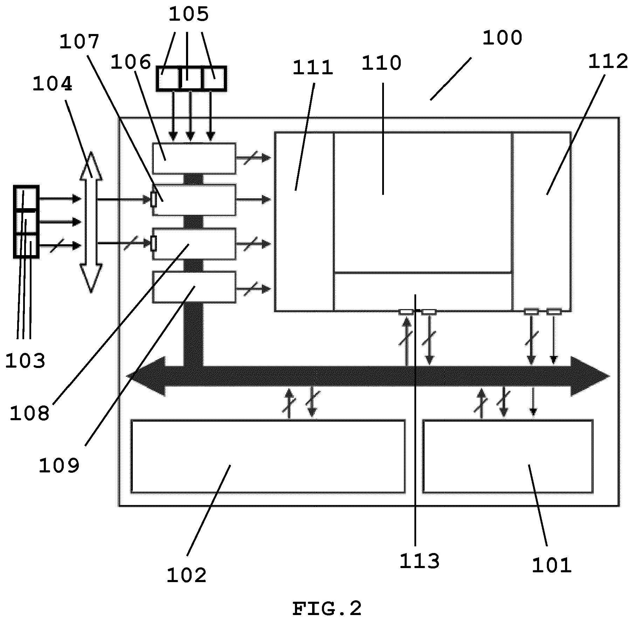

FIG. 2 illustrates one embodiment of a high-level architecture of a microcontroller integrated circuit 100 comprising a learning spiking neural network 110. In this context, microcontrollers 110 are economical means of data collection, sensing, pattern recognition and actuating the physical signals. In spiking neural network individual neurons communicate in asynchronous manner through sparse events, or spikes. The spiking neural network system is implemented as an array of spike integrators which include the neuro-synaptic core. One possible implementation of learning spiking neural network has been described in WO2020/099680 A2.

The spiking neural network 110 is connected to one or more streaming input data ports 111, which provide the spiking neural network 110 with input which will be converted into spatio-temporal spike trains. The spiking neural network 110 is connected to one or more output ports 112. A memory mapped control and configuration interface 113 controls the configuration parameters of the spiking neural network 110, for example the synaptic weights and/or the neuron configuration and further can include peripherals (e.g. A/D converters, D/A converters, bandgaps, PLLs) and circuits for control and adaptation of neuron, synapse and plasticity (learning) circuits, among others. The interface 113 reads out a memory device 102 where the settings for the spiking neural network 110 are saved and sends signals to the spiking neural network 110 to set the hardware accordingly. The interface 113 could send analog signals to the spiking neural network 110. The settings could include configuration parameters of each neuron 1 or synaptic element 2 of the spiking neural network 110, or the network topology.

Each neuron 1 can have a set of configuration parameters that control the precise firing behaviour of that neuron 1. For example, the neuron may be designed with a firing threshold, which represents a threshold of a voltage, energy, or other variable which accumulates in the neuron as a result of receiving inputs, and where the neuron generates an output spike (such as a voltage, current or energy spike) when the accumulated variable meets or exceeds the firing threshold. The neuron may implement an integration function which integrates the inputs to the neuron to determine the adjustment to the accumulated variable. In addition, the neuron may also be designed with: (a) a leakage rate, which represents the rate at which the accumulated variable in the neuron decays over time; (b) a resting value of the accumulated variable, which represents the value to which the accumulated variable will decay over time in the absence of any input signals to the neuron; (c) an integration time constant, which represents the time over which an input signal is integrated to determine any increase in the accumulated variable in the neuron; (d) a refractory level, which represents the value of the accumulated variable in the neuron immediately after firing of the neuron; (e) a refractory period, which represents the time period required for the accumulated variable in the neuron to rise to the resting value after firing of the neuron. These parameters may be predetermined and/or configurable and/or adjustable for each neuron. By adjusting for example the firing threshold, leakage rate, integration time constant, and refractory period of the neuron to match the energy content of a critical input signal feature, the neuron 1 will generate one or more precisely timed spikes when stimulated with an input signal containing that feature.

Configuration parameters of the synaptic elements 2 include the weight and gain of a synaptic element 2. The weight of the synaptic element 2 is typically used to adjust the synaptic element 2, while the gain of the synaptic element 2 is used for amplification of the signal in hardware and typically concerns a low pass filter implementation. Typically, the gain is fixed at initialisation of the network 110, while the weight can change based on the evolution/training of the spiking neural network 110.

The microcontroller integrated circuit 100 further comprises a microprocessor core 101 to perform computations and control of the integrated circuit 100. For example, the microprocessor core 101 can oversee the communication between the memory mapped control and configuration interface 113 and the memory device 102.

The memory device 102 can be any computer-readable storage media. The memory device 102 may be non-transitory storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information may be permanently stored; and (ii) writable storage media, e.g., hard disk drive or any type of solid-state random-access semiconductor memory, flash memory, on which alterable information may be stored.

External buses 104 are connected to one or multiple sensors or other data sources 103. The microcontroller integrated circuit 100 can also be directly attached to sensors 105. The sensors can first go through an analog-to-digital convertor 106. One or multiple serial input/output ports 107, and general purpose input/output ports 108 can be present on the microcontroller integrated circuit 100. Direct access of external equipment can be arranged to the memory of the microcontroller integrated circuit 100 by direct memory access (DMA) 109.

The SNN core may employ a mixed analog-digital computational platform, i.e. the spike trains incorporate analog information in the timing of the events, which are subsequently transformed back into an analog representation at the inputs of the synaptic matrix.

The neuro-synaptic core disclosed in the present invention can be organized as repeating arrays of synaptic circuits and neuron units, where each unit can form a cell assembly. The system incorporates the presence of electronic synapses at the junctions of the array. The periphery of the array includes rows of the synaptic circuits which mimic the action of the soma and axon hillock of biological neurons. Further, each neuro-synaptic core in the array can have a local router, which communicates to the routers of other cores within a dedicated real-time reconfigurable network-on-chip.

A classifier in the present invention can have a set of output neurons (one for each classification class) each of which fires an event (spike) according to its firing probability distribution. Neurosynaptic computational elements are able to generate complex spatio-temporal dynamics, extendable towards specific features that can aid target signal processing functionality.

The neuron spiking properties are controlled through the specific parameter sets. A neuron functions as a (frequency) band-pass device, where a phase-lock condition occurs at a frequency associated with the time constants of, both, neuronal and spike-frequency adaptation dynamics. Here a band-pass device can be seen as a band-pass filter, i.e. only processing signals which fall within designated (designed) a frequency band (range). A spike-frequency adaptation mechanism leads to specific consequences for the sensory signal processing, e.g. accentuating changes in stimulus parameters, preventing spiking frequency saturation, or tuning frequency responses to specific stimulus features. The topology of neurosynaptic elements controls the regularity of spontaneous neuronal spiking, e.g. a firing rate scaling factor and the intensity of intrinsic noise, yielding a coherence/frequency occurrence.

The present invention encompasses that the neuro-synaptic cores could apply a transient synchronization, homeostatic regulation, heterogeneous learning rule, weight storage type and communication protocol to the synapse matrix.

In an embodiment, the neuro-synaptic cores could be organized as a single core implementing a homogeneous learning rule. In another embodiment, different regions of the synapse matrix can be configured with the heterogenous learning rules, depending on the transient synchronization. The size of this region of the synapse matrix can be configurable either at design time in order to create a specialized circuit, or dynamically at runtime wherein the array will have a heterogeneous clustering of synaptic circuits, each cluster implementing e.g. a different learning rule.

This heterogeneous clustering may require a synchronization mapping and/or a synthesis algorithm to map each neuron unit to the determined clusters of the synapse matrix based on the transient synchrony. Without loss of generality, adaptive spiking neural networks enable implementation of run-time physical signals to inference signal processors, e.g. for radar, lidar and bio-physical signal inference.

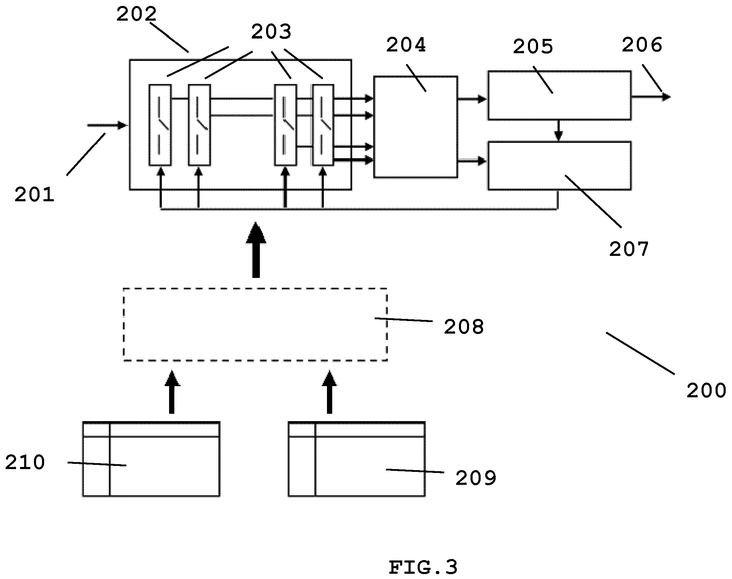

Figure 3 shows schematically an exemplary run-time physical signal to inference signal processor 200 with adaptive spiking neural network. As illustrated, the system 200 can include a set of parallel adaptive channel selectors and extractors 203, where each channel or subset of channels can be activated based on a specific signal processing task at any given moment in time.

A physical signal 201 enters the processor 200 and based on a specific signal processing task the selectors and extractors 203 select and extract specific signal features form the physical signal 201 that serves as input to the processor 200. The adaptivity of the feature selection and extraction module 202 comprising the selectors and extractors means that based on the specific processing tasks, different signal features can be selected and extracted. This is important, because the system becomes more versatile in this way. Different applications often require completely different signal features; e.g. analysing an image is done in a different way from analysing a cardiogram, and even images can be analysed in different ways based on the information one would like to get out of the image. Because the processor 200 is adaptive, it can be used for numerous applications.

Next, the different signals coming from the feature selection and extraction module 202 can go through a multiplexer and pre-processing stage 204. Here the feature sets preprocessed (e.g. filtered, amplified, et cetera) and forwarded on a single output line. In some cases, pre-processing the signal might not be necessary.

The feature sets from adaptive channel selectors and extractors are, offered to a SNN information processor 205 that performs the classification and processing of the preprocessed signal, and performs the application specific signal information estimations eliminating the need for full reconstruction of the sensor waveforms, i.e. sensor specific signals. This offers significant improvement in energy-efficiency. The features can be activated and configured at run-time along several parameters such as gain, bandwidth, noise filtering, variability bounding, et cetera. The information or inference metric 206, coming as output from the SNN can then be used by a specific application.

Inference accuracy depends on environmental conditions such as signal dynamics or signal interference. At run time, an operating settings and condition block 207 establishes the present operating context and consequently, the optimal feature set. A feedback loop dynamically adapts the channel specifications within power-performance design space. A run-time configuration execution unit subsequently only activates and configures the relevant settings.

Based on training and test data across processing tasks 209 and parametrized performance settings 210, a subset of learning and signal processing tasks can be selected 208; for example: noise filtering, variability bounding, channel synchronization.

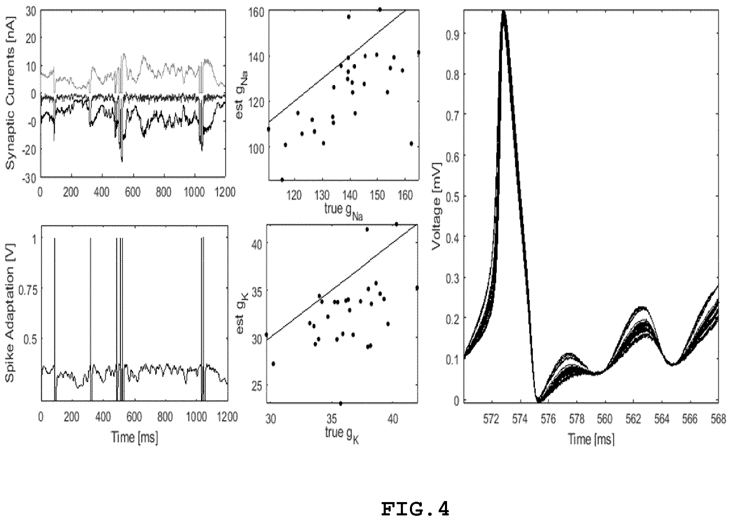

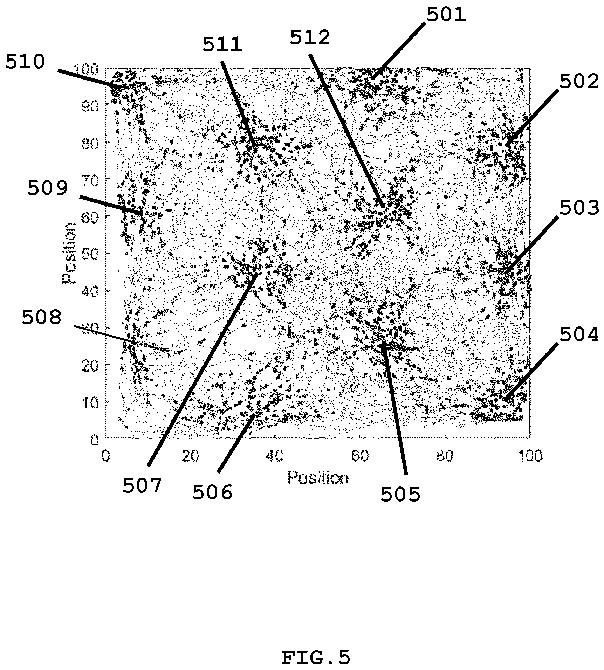

The neuromorphic system displays a wide range of the pattern activity, e.g., full synchrony, cluster or asynchronous states, depending on the excitatory/inhibitory network interaction conditions, heterogeneities in the input patterns, and the neurosynaptic elements spatio-temporal dynamics, see FIG. 4 and Fig. 5.

FIG. 4 shows nominal values of a spike adaptation mechanism in the leftmost two graphs, variability in the signal generation and refractory period mechanism, which model sodium (Na) and potassium (K) conductance activation and inactivation dynamics, respectively, illustrated in the middle two graphs, and in the rightmost graph, neuron spike with the similar level of variability inserted.

FIG. 5 shows a network with different synchronized cell assemblies 501-512. At different positions in the network, some local clusters 501-512 are shown, which portray synchronized behaviour: these neurons oscillate synchronously and e.g. spike with the same frequency. The behaviour of the different local clusters 501-512 can be different, based on the requirements for each local cluster 501-512 within the network. The SNN can be adaptive, hence the local clusters 501-512 can change e.g. oscillation frequency, or even the neurons comprised within a single local cluster can change.

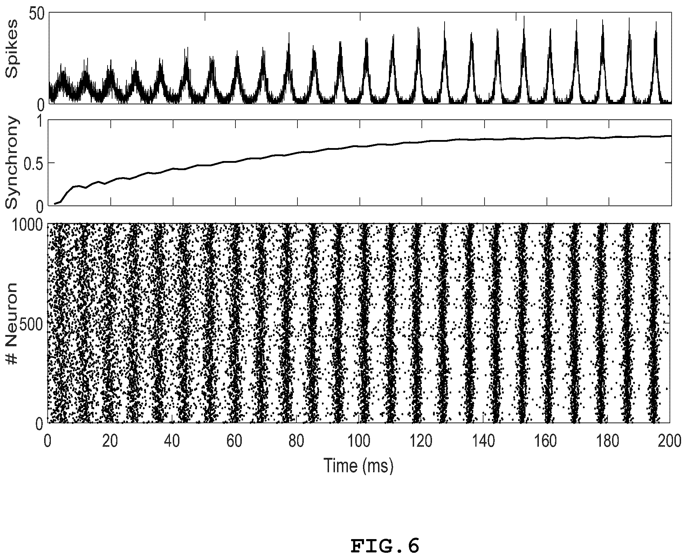

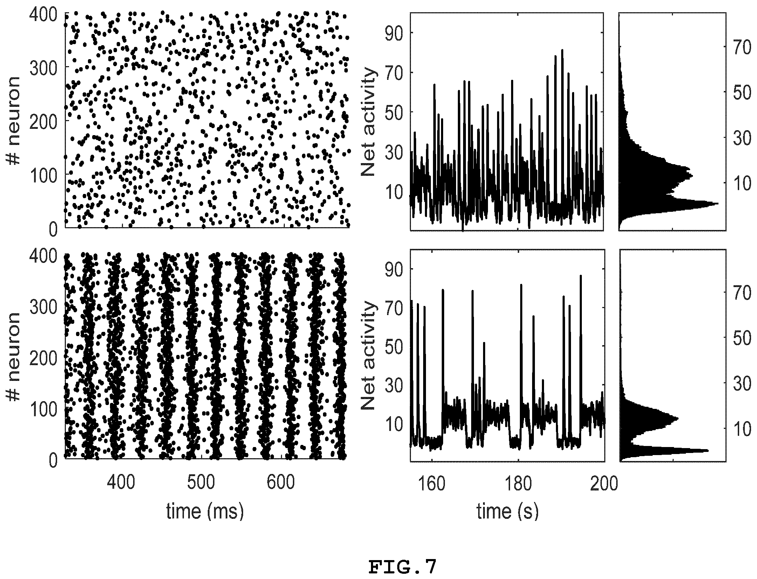

Neurons generate action potentials with a wide-range of spike dynamics. Synchrony of a reconfigurable network for the wide temporal range is illustrated in FIG. 6 and FIG. 7.

FIG. 6 shows for a specific time range, an increase in the oscillation synchronicity of the spiking neurons in a cell assembly. As can be seen in the top graph, the spikes become more and more localized in time. In the bottom graph, it can be seen that the neurons spike more and more within the same time window within the oscillation period. As can be seen in the middle graph, while the cell assembly starts with an amount of synchronicity that approaches zero percent, at the end of the specific time range the synchronicity has approached approximately eighty percent. Depending on the application, the amount of synchronicity could increase further.

FIG. 7 shows at the top a non-regulated state, and on the bottom a regulated state, the two graphs on the left show activity of individual neurons through time, the two graphs on the right show network activity of the (non-)regulated network.

The regulated network shows synchronous oscillatory behaviour. As such the network activity is much more localized; substantially all neurons spike within a specific time window within the oscillatory period. This in contrast with the non-regulated network state in the upper graphs, where the network activity is almost random.

The duration selectivity curves are non-symmetrical to contend with heterogeneity in spike latency and resulting latency curves. The phase-locking strength to the target frequency is controlled by altering their detuning parameter, e.g. the initial frequency alteration. The initial transient dynamics set through synaptic coupling guide the network towards the stationary dynamical regime. With increased coupling, a transition occurs from an ensemble of individually firing neurons to a coherent synchronized network.

The extent to which transient synchrony seize the (instantaneous) phase relations between (controlled) targeted frequency was examined, in addition to information transfer. The neurons generate time-locked patterns; due to the interaction between conductance delay and plasticity rules, the network can form a set of neuronal groups with reproducible and precise firing sequences, which are conditional to an activation pattern. As the conductance is increased (consequently, resulting in a net excitation to the network), the firing rates can increase and become more uniform with a lower coefficient of variation. Entrainment of low-frequency synchronized behaviour includes a reorganization of phase so that the optimal, i.e. the most excitable, phase aligns with temporal characteristics of the events in ongoing input stimulus. The phase difference between a signal from an input signal feature and the firing of the local cluster thus disappears due to phase locking. The sequence of synaptic current, i.e. outward, inward, decreases temporal jitter in the generation of action potentials in individual neurons, and, consequently, create a network with increased controllability of a synchronized activity and homeostatic regulation.

In this way, using synchronous oscillation of the cell assemblies within the spiking neural network, the network becomes sensitive to particular frequencies within the (converted) input signal.

The invention relates to an implementation of mapping methodology that optimizes the temporal dynamics of stochastic cell assemblies and allows the synchronization of cell assemblies that enhance information transmission within the spiking neural network.

The invention further relates to a method for synchronization of stochastic synaptic drive firing rate for an excitatory and inhibitory spiking network with system time delays and stochastic input disturbances.

The invention further realises an increase in cell assembly structure dimensionality by ensuring generalized outer synchronization of stochastic neural networks based on the average autocorrelation function, and provides a mechanism that is robust against inhomogeneities, sparseness of the connectivity, and noise.

The invention further implements a synchrony mechanism that is compatible with hedonistic approaches such as Hebbian learning, i.e. correlated inputs tend to be strengthened (spike-timing dependent plasticity).

The invention further implements a spiking neural network information processor system that performs the application specific signal information estimations eliminating the need for full reconstruction of sensor waveforms.

The invention further relates to a procedure for a system intrinsic transition from a spatio-temporally chaotic activity pattern to pulse activity that represent structure or sensory invariants in stimuli, or content forming a coherent entity, such as a visual object in a scene, and which allows neural circuits to extract relevant information from realistic sensory stimuli in the presence of distractors.

The invention further implements computational elements capable of generating complex spatio-temporal dynamics that can be extended towards particular characteristics, such as a change in frequency response, and consequent adjustment of the phases of spiking, to perform time-dependent computations, in addition to a phase-locking of the network activity.

Some features of the invention may be implemented as a computer program product for use with a computer system. The program(s) of the program product may define functions of the embodiments (including the methods described herein) and can be contained on a variety of computer-readable storage media. The computer-readable storage media may be non-transitory storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information may be permanently stored; and (ii) writable storage media, e.g., hard disk drive or any type of solid-state random-access semiconductor memory, flash memory, on which alterable information may be stored.

Two or more of the above embodiments may be combined in any appropriate manner.

## Claims

1. A method for processing a signal using a spiking neural network, wherein
the spiking neural network comprises a plurality of spiking neurons, and a plurality of synaptic elements interconnecting the spiking neurons to form the network implemented in hardware,
wherein each synaptic element is adapted to receive a synaptic input signal and apply a weight to the synaptic input signal to generate a synaptic output signal, the synaptic elements being configurable to adjust the weight applied by each synaptic element, and
wherein each of the spiking neurons is adapted to receive one or more of the synaptic output signals from one or more of the synaptic elements, and generate a spatio-temporal spike train output signal in response to the received one or more synaptic output signals,
wherein a response local cluster within the network comprises a set of the spiking neurons and a plurality of synaptic elements interconnecting the set of the spiking neurons,
wherein the method comprises:
obtaining the signal to be processed, wherein the signal to be processed is representable in the frequency domain;
configuring the spiking neural network by setting the weights of the synaptic elements and the spiking behavior of the spiking neurons in the response local cluster such that the network state within the response local cluster is a steady-state numerical solution when a stochastic distribution activity or statistical parameter of the set of neurons within the local cluster is stationary, the steady-state numerical solution signifying a state of the network with settled behaviour wherein recently observed behaviour of the system will continue into the future,
wherein the steady-state numerical solution is a solution of the equation: $EK {\left(t\right)}_{∝} + K {\left(t\right)}_{∝} {E}^{T} + {FF}^{T} = 0 ,$ with *K*(*t*)_{∝} the steady-state value of the auto-correlation function *K*(*t*) of the synaptic drive Γ(*t*), *F(t)* the deterministic function of the stochastic part of the synaptic drive Γ(*t*) as given by the formula: $Γ \left(t\right) = Φ \left(t, {t}_{0}\right) Γ \left({t}_{0}\right) + {\int }_{{t}_{0}}^{t} Φ \left(t, τ\right) F \left(τ\right) dω \left(τ\right) ,$ with Φ(*t*,*τ*) the state-transition matrix of the synaptic drive Γ(*t*) of all neurons within the response local cluster and *dω* an infinitesimal stochastic change, and *E*(*t*) the deterministic function defined by *dΦ*(*t, τ*)/*dt = E*(*t*)Φ(*t, τ*),
wherein the setting of the weights of the synaptic elements and the spiking behavior of the spiking neurons in the response local cluster that define the synaptic drive, comprises iteratively training the response local cluster by optimizing weights of the synaptic elements and the spiking behavior of the spiking neurons, such that the required steady-state behavior is reached;
transforming the signal to be processed using an encoder into one or multiple spatio-temporal spike trains;
processing the one or multiple spatio-temporal spike trains using the configured spiking neural network in order to obtain a spiking neural network output signal.

2. The method of claim 1, wherein the signal to be processed comprises a radar-, lidar-, bio-physical-, image- or sound signal.

3. The method of claim 1 or 2, wherein the SNN is comprised in a neuromorphic SNN emulator, preferably a system containing electronic analog/mixed signal circuits that mimic neuro-biological architectures present in the nervous system; and/or
wherein the neurons and synaptic elements are implemented in hardware using analog circuits or circuit elements or digital hardwired logic circuits or circuit elements, or a combination of these, preferably wherein each neuron and each synaptic element is implemented as a hardware circuit or circuit element.

4. The method of any of the preceding claims, wherein the spiking neural network comprises a drive local cluster, which comprises a set of the spiking neurons and a plurality of synaptic elements interconnecting the set of the spiking neurons, such that an output signal of the drive local cluster serves as an input signal to the response local cluster such that the drive local cluster and the response local cluster are coupled with a particular coupling strength, wherein the method further comprises:
setting the network state within the response local cluster to have a steady-state when the particular coupling strength is smaller than a predetermined coupling strength.

5. The method of any of the previous claims, wherein a stochastic distribution activity or statistical parameter of the set of neurons within the response local cluster is stationary or non-stationary when the particular coupling strength is smaller than the predetermined coupling strength.

6. The method of any of the previous claims, wherein an increase in a structure dimensionality of the response local cluster is realized by ensuring generalized outer synchronization between the drive local cluster and the response local cluster, wherein generalized outer synchronization is the coupling of the drive local cluster to the response local cluster by means of the particular coupling strength being equal to or larger than the predetermined coupling strength, preferably wherein the generalized outer synchronization is ensured based on the average autocorrelation function 1/N×{Σ E[*Γ*(*t*+*τ*/2)*Γ*(*t-τ*/2)^{T}]} of the synaptic drive *Γ*(*t*) with *τ* the delay, N the number of neurons in the response local cluster, where the average is over the neuron population.

7. The method of any of the preceding claims, wherein the steady-state numerical solution is obtained by using feedback connections between the neurons in the response local cluster that results in the synchronization of neuronal activity of the neurons.

8. A system, comprising a spiking neural network, for processing a signal representable in the frequency domain, wherein the spiking neural network comprising a plurality of spiking neurons, and a plurality of synaptic elements interconnecting the spiking neurons to form the network implemented in hardware,
wherein each synaptic element is adapted to receive a synaptic input signal and to apply a weight to the synaptic input signal to generate a synaptic output signal, the synaptic elements being configurable to adjust the weight applied by each synaptic element, and
wherein each of the spiking neurons is adapted to receive one or more of the synaptic output signals from one or more of the synaptic elements, and generate a spatio-temporal spike train output signal in response to the received one or more synaptic output signals,
wherein a response local cluster within the network comprises a set of the spiking neurons and a plurality of synaptic elements interconnecting the set of neurons,
wherein the weights of the synaptic elements and the spiking behavior of the spiking neurons in the response local cluster are set such that the network state within the response local cluster is a steady-state numerical solution when a stochastic distribution activity or statistical parameter of the set of neurons within the local cluster is stationary, the steady-state numerical solution signifying a state of the network with settled behaviour wherein recently observed behaviour of the system will continue into the future, wherein the steady-state numerical solution is a solution of the equation: $EK {\left(t\right)}_{∝} + K {\left(t\right)}_{∝} {E}^{T} + {FF}^{T} = 0 ,$ with *K*(*t*)_{∝} the steady-state value of the auto-correlation function *K*(*t*) of the synaptic drive Γ(*t*), *F*(*t*) the deterministic function of the stochastic part of the synaptic drive Γ(*t*) as given by the formula: $Γ \left(t\right) = Φ \left(t, {t}_{0}\right) Γ \left({t}_{0}\right) + {\int }_{{t}_{0}}^{t} Φ \left(t, τ\right) F \left(τ\right) dω \left(τ\right) ,$ with Φ(*t*,*τ*) the state-transition matrix of the synaptic drive Γ(*t*) of all neurons within the response local cluster and *dω* an infinitesimal stochastic change, and *E*(*t*) the deterministic function defined by *dΦ*(*t, τ*)/*dt = E*(*t*)Φ(*t, τ*); wherein the setting of the weights of the synaptic elements and the spiking behavior of the spiking neurons in the response local cluster that define the synaptic drive, comprises iteratively training the response local cluster by optimizing weights of the synaptic elements and the spiking behavior of the spiking neurons, such that the required steady-state behavior is reached; and wherein the system furthermore comprises:
an encoder configured to transform the signal to be processed into one or multiple spatio-temporal spike trains; and
wherein the spiking neural network is configured to process the one or multiple spatio-temporal spike trains in order to obtain a spiking neural network output signal.

9. The system of claim 8, wherein the signal to be processed comprises a radar-, lidar-, image- or sound signal.

10. The system of claim 8 or 9, wherein the SNN is comprised in a neuromorphic SNN emulator, preferably a system containing electronic analog/mixed signal circuits that mimic neuro-biological architectures present in the nervous system; and/or
wherein the neurons and synaptic elements are implemented in hardware using analog circuits or circuit elements or digital hardwired logic circuits or circuit elements, or a combination of these, preferably wherein each neuron and each synaptic element is implemented as a hardware circuit or circuit element.

11. The system of any one of claims 8-10, wherein the spiking neural network comprises a drive local cluster, which comprises a set of the spiking neurons and a plurality of synaptic elements interconnecting the set of the spiking neurons, such that an output signal of the drive local cluster serves as an input signal to the response local cluster such that the drive local cluster and the response local cluster are coupled with a particular coupling strength,
wherein the network state within the response local cluster has a steady-state when the particular coupling strength is smaller than a predetermined coupling strength .

12. The system of any one of claims 8-11, wherein the drive local cluster is an input encoder of the spiking neural network which transforms a sampled input signal into spatio-temporal spike trains that are subsequently processed by the response local cluster.

13. A method for processing an input signal representable in the frequency domain using the system as in any one of claims 8-12, comprising:
obtaining the signal to be processed;
transforming the signal to be processed using an encoder into one or multiple spatio-temporal spike trains; and
processing the one or multiple spatio-temporal spike trains using the configured spiking neural network in order to obtain a spiking neural network output signal.

## Patentansprüche

1. Verfahren zum Verarbeiten eines Signals unter Verwendung eines neuronalen Spiking-Netzwerks,
wobei das neuronale Spiking-Netzwerk eine Vielzahl von Spiking-Neuronen und eine Vielzahl von synaptischen Elementen umfasst, die die Spiking-Neuronen miteinander verbinden, um das in Hardware implementierte Netzwerk zu bilden,
wobei jedes synaptische Element angepasst ist, ein synaptisches Eingangssignal zu empfangen und eine Gewichtung auf das synaptische Eingangssignal anzuwenden, um ein synaptisches Ausgangssignal zu erzeugen, wobei die synaptischen Elemente konfiguriert werden können, um die von jedem synaptischen Element angewendete Gewichtung anzupassen, und
wobei jedes der Spiking-Neuronen angepasst ist, eines oder mehrere der synaptischen Ausgangssignale von einem oder mehreren der synaptischen Elemente zu empfangen und als Reaktion auf das eine oder die mehreren empfangenen synaptischen Ausgangssignale ein Ausgangssignal in Form einer raumzeitlichen Spike-Folge zu erzeugen,
wobei ein lokaler Antwortcluster innerhalb des Netzwerks einen Satz der Spiking-Neuronen und eine Vielzahl von synaptischen Elementen umfasst, die den Satz der Spiking-Neuronen miteinander verbinden, wobei das Verfahren umfasst:
Erhalten des zu verarbeitenden Signals, wobei das zu verarbeitende Signal im Frequenzbereich dargestellt werden kann;
Konfigurieren des neuronalen Spiking-Netzwerks durch Einstellen der Gewichtungen der synaptischen Elemente und des Spiking-Verhaltens der Spiking-Neuronen in dem lokalen Antwortcluster derart, dass der Netzwerkzustand innerhalb des lokalen Antwortclusters eine numerische Lösung im Beharrungszustand ist, wenn eine stochastische Verteilungsaktivität oder ein statistischer Parameter des Satzes von Neuronen innerhalb des lokalen Clusters stationär ist, wobei die numerische Lösung im Beharrungszustand einen Zustand des Netzwerks mit eingeschwungenem Verhalten bezeichnet, bei dem sich das kürzlich beobachtete Verhalten des Systems in der Zukunft fortsetzen wird,
wobei die numerische Lösung im Beharrungszustand eine Lösung der folgenden Gleichung ist: $EK {\left(t\right)}_{α} + K {\left(t\right)}_{α} {E}^{T} + {FF}^{T} = 0 ,$ wobei *K*(*t*)*_{α}* der Wert der Autokorrelationsfunktion *K*(*t*) der synaptischen Ansteuerung *Γ*(*t*) im Beharrungszustand ist, und *F*(*t*) die deterministische Funktion des stochastischen Anteils der synaptischen Ansteuerung *Γ*(*t*) ist, wie durch die folgende Formel gegeben: $Γ \left(t\right) = Φ \left(t, {t}_{0}\right) Γ \left({t}_{0}\right) + {\int }_{{t}_{0}}^{t} Φ \left(t, τ\right) F \left(τ\right) dω \left(τ\right) ,$ wobei ***Φ***(*t*, τ) die Zustandsübergangsmatrix der synaptischen Ansteuerung *Γ*(*t*) aller Neuronen innerhalb des lokalen Antwortclusters und *dω* eine infinitesimale stochastische Änderung ist und *E*(*t*) die deterministische Funktion ist, die definiert ist durch $\frac{dΦ \left(t, τ\right)}{dt} = E \left(t\right) Φ \left(t, τ\right)$,
wobei das Einstellen der Gewichtungen der synaptischen Elemente und des Spiking-Verhaltens der Spiking-Neuronen in dem lokalen Antwortcluster, die die synaptische Ansteuerung definieren, ein iteratives Trainieren des lokalen Antwortclusters durch Optimieren der Gewichtungen der synaptischen Elemente und des Spiking-Verhaltens der Spiking-Neuronen umfasst, sodass das erforderliche Verhalten im Beharrungszustand erreicht wird;
Umwandeln des zu verarbeitenden Signals unter Verwendung eines Codierers in eine oder mehrere raumzeitliche Spike-Folgen;
Verarbeiten der einen oder der mehreren raumzeitlichen Spike-Folgen unter Verwendung des konfigurierten neuronalen Spiking-Netzwerks, um ein Ausgangssignal des neuronalen Spiking-Netzwerks zu erhalten.

2. Verfahren nach Anspruch 1, wobei das zu verarbeitende Signal ein Radar-, Lidar-, biophysikalisches, Bild- oder Tonsignal umfasst.

3. Verfahren nach Anspruch 1 oder 2, wobei das SNN in einem neuromorphen SNN-Emulator umfasst ist, vorzugsweise einem System, das elektronische Analog-/Mischsignalschaltungen enthält, die neurobiologische Architekturen nachbilden, die im Nervensystem vorhanden sind; und/oder
wobei die Neuronen und synaptischen Elemente unter Verwendung analoger Schaltungen oder Schaltungselemente oder digitaler festverdrahteter Logikschaltungen oder Schaltungselemente oder einer Kombination davon in Hardware implementiert sind, wobei vorzugsweise jedes Neuron und jedes synaptische Element als Hardwareschaltung oder Hardwareschaltungselement implementiert ist.

4. Verfahren nach einem der vorhergehenden Ansprüche, wobei das neuronale Spiking-Netzwerk einen lokalen Ansteuerungscluster umfasst, der einen Satz der Spiking-Neuronen und eine Vielzahl von synaptischen Elementen umfasst, die den Satz der Spiking-Neuronen miteinander verbinden, sodass ein Ausgangssignal des lokalen Ansteuerungsclusters als Eingangssignal für den lokalen Antwortcluster dient, sodass der lokale Ansteuerungscluster und der lokale Antwortcluster mit einer bestimmten Kopplungsstärke gekoppelt sind, wobei das Verfahren ferner umfasst:
Einstellen des Netzwerkzustands innerhalb des lokalen Antwortclusters derart, dass dieser einen Beharrungszustand aufweist, wenn die bestimmte Kopplungsstärke kleiner als eine vorbestimmte Kopplungsstärke ist.

5. Verfahren nach einem der vorhergehenden Ansprüche, wobei eine stochastische Verteilungsaktivität oder ein statistischer Parameter des Satzes von Neuronen innerhalb des lokalen Antwortclusters stationär oder nichtstationär ist, wenn die bestimmte Kopplungsstärke kleiner als die vorbestimmte Kopplungsstärke ist.

6. Verfahren nach einem der vorhergehenden Ansprüche, wobei eine Erhöhung einer strukturellen Dimensionalität des lokalen Antwortclusters durch Sicherstellen einer generalisierten äußeren Synchronisation zwischen dem lokalen Ansteuerungscluster und dem lokalen Antwortcluster realisiert wird, wobei die generalisierte äußere Synchronisation die Kopplung des lokalen Ansteuerungsclusters mit dem lokalen Antwortcluster mittels der bestimmten Kopplungsstärke ist, die gleich der vorbestimmten Kopplungsstärke oder größer als diese ist, wobei vorzugsweise die generalisierte äußere Synchronisation auf Grundlage der durchschnittlichen Autokorrelationsfunktion $\frac{1}{N} \times \left\{\sum E \left[Γ\left(t+τ/2\right)Γ{\left(t-τ/2\right)}^{T}\right]\right\}$ der synaptischen Ansteuerung *Γ*(*t*) sichergestellt wird, wobei *τ* die Verzögerung und N die Anzahl der Neuronen in dem lokalen Antwortcluster ist, wobei die Mittelwertbildung über die Neuronenpopulation erfolgt.

7. Verfahren nach einem der vorhergehenden Ansprüche, wobei die numerische Lösung im Beharrungszustand durch Verwenden von Rückkopplungsverbindungen zwischen den Neuronen in dem lokalen Antwortcluster erhalten wird, die zu einer Synchronisation der neuronalen Aktivität der Neuronen führen.

8. System, umfassend ein neuronales Spiking-Netzwerk, zum Verarbeiten eines im Frequenzbereich darstellbaren Signals, wobei das neuronale Spiking-Netzwerk eine Vielzahl von Spiking-Neuronen und eine Vielzahl von synaptischen Elementen umfasst, die die Spiking-Neuronen miteinander verbinden, um das in Hardware implementierte Netzwerk zu bilden,
wobei jedes synaptische Element angepasst ist, ein synaptisches Eingangssignal zu empfangen und eine Gewichtung auf das synaptische Eingangssignal anzuwenden, um ein synaptisches Ausgangssignal zu erzeugen, wobei die synaptischen Elemente konfiguriert werden können, um die von jedem synaptischen Element angewendete Gewichtung anzupassen, und
wobei jedes der Spiking-Neuronen angepasst ist, eines oder mehrere der synaptischen Ausgangssignale von einem oder mehreren der synaptischen Elemente zu empfangen und
als Reaktion auf das eine oder die mehreren empfangenen synaptischen Ausgangssignale ein Ausgangssignal in Form einer raumzeitlichen Spike-Folge zu erzeugen,
wobei ein lokaler Antwortcluster innerhalb des Netzwerks einen Satz der Spiking-Neuronen und eine Vielzahl von synaptischen Elementen umfasst, die den Satz von Neuronen miteinander verbinden,
wobei die Gewichtungen der synaptischen Elemente und das Spiking-Verhalten der Spiking-Neuronen in dem lokalen Antwortcluster derart eingestellt sind, dass der Netzwerkzustand innerhalb des lokalen Antwortclusters eine numerische Lösung im Beharrungszustand ist, wenn eine stochastische Verteilungsaktivität oder ein statistischer Parameter des Satzes von Neuronen innerhalb des lokalen Clusters stationär ist, wobei die numerische Lösung im Beharrungszustand einen Zustand des Netzwerks mit eingeschwungenem Verhalten bezeichnet, bei dem sich das kürzlich beobachtete Verhalten des Systems in der Zukunft fortsetzen wird, wobei die numerische Lösung im Beharrungszustand eine Lösung der folgenden Gleichung ist: $EK {\left(t\right)}_{α} + K {\left(t\right)}_{α} {E}^{T} + {FF}^{T} = 0 ,$ wobei *K*(*t*)*_{α}* der Wert der Autokorrelationsfunktion *K*(*t*) der synaptischen Ansteuerung *Γ*(*t*) im Beharrungszustand ist, und *F*(*t*) die deterministische Funktion des stochastischen Anteils der synaptischen Ansteuerung *Γ*(*t*) ist, wie durch die folgende Formel gegeben: $Γ \left(t\right) = Φ \left(t, {t}_{0}\right) Γ \left({t}_{0}\right) + {\int }_{{t}_{0}}^{t} Φ \left(t, τ\right) F \left(τ\right) dω \left(τ\right) ,$ wobei ***Φ***(*t*, *τ*) die Zustandsübergangsmatrix der synaptischen Ansteuerung *Γ*(*t*) aller Neuronen innerhalb des lokalen Antwortclusters und *dω* eine infinitesimale stochastische Änderung ist und *E*(*t*) die deterministische Funktion ist, die definiert ist durch $\frac{dΦ \left(t, τ\right)}{dt} = E \left(t\right) Φ \left(t, τ\right)$; wobei das Einstellen der Gewichtungen der synaptischen Elemente und des Spiking-Verhaltens der Spiking-Neuronen in dem lokalen Antwortcluster, die die synaptische Ansteuerung definieren, ein iteratives Trainieren des lokalen Antwortclusters durch Optimieren der Gewichtungen der synaptischen Elemente und des Spiking-Verhaltens der Spiking-Neuronen umfasst, sodass das erforderliche Verhalten im Beharrungszustand erreicht wird, und wobei das System ferner umfasst:
einen Codierer, der konfiguriert werden kann, das zu verarbeitende Signal in eine oder mehrere raumzeitliche Spike-Folgen umzuwandeln; und
wobei das neuronale Spiking-Netzwerk konfiguriert werden kann, die eine oder die mehreren raumzeitlichen Spike-Folgen zu verarbeiten, um ein Ausgangssignal des neuronalen Spiking-Netzwerks zu erhalten.

9. System nach Anspruch 8, wobei das zu verarbeitende Signal ein Radar-, Lidar-, Bild- oder Tonsignal umfasst.

10. System nach Anspruch 8 oder 9, wobei das SNN in einem neuromorphen SNN-Emulator umfasst ist, vorzugsweise einem System, das elektronische Analog-/Mischsignalschaltungen enthält, die neurobiologische Architekturen nachbilden, die im Nervensystem vorhanden sind; und/oder
wobei die Neuronen und synaptischen Elemente unter Verwendung analoger Schaltungen oder Schaltungselemente oder digitaler festverdrahteter Logikschaltungen oder Schaltungselemente oder einer Kombination davon in Hardware implementiert sind, wobei vorzugsweise jedes Neuron und jedes synaptische Element als Hardwareschaltung oder Hardwareschaltungselement implementiert ist.

11. System nach einem der Ansprüche 8 bis 10, wobei das neuronale Spiking-Netzwerk einen lokalen Ansteuerungscluster umfasst, der einen Satz der Spiking-Neuronen und eine Vielzahl von synaptischen Elementen umfasst, die den Satz der Spiking-Neuronen miteinander verbinden, sodass ein Ausgangssignal des lokalen Ansteuerungsclusters als Eingangssignal für den lokalen Antwortcluster dient, sodass der lokale Ansteuerungscluster und der lokale Antwortcluster mit einer bestimmten Kopplungsstärke gekoppelt sind,
wobei der Netzwerkzustand innerhalb des lokalen Antwortclusters einen Beharrungszustand aufweist, wenn die bestimmte Kopplungsstärke kleiner als eine vorbestimmte Kopplungsstärke ist.

12. System nach einem der Ansprüche 8 bis 11, wobei der lokale Ansteuerungscluster ein Eingangscodierer des neuronalen Spiking-Netzwerks ist, der ein abgetastetes Eingangssignal in raumzeitliche Spike-Folgen umwandelt, die anschließend von dem lokalen Antwortcluster verarbeitet werden.

13. Verfahren zum Verarbeiten eines im Frequenzbereich darstellbaren Eingangssignals unter Verwendung des Systems nach einem der Ansprüche 8 bis 12, umfassend:
Erhalten des zu verarbeitenden Signals;
Umwandeln des zu verarbeitenden Signals unter Verwendung eines Codierers in eine oder mehrere raumzeitliche Spike-Folgen; und
Verarbeiten der einen oder der mehreren raumzeitlichen Spike-Folgen unter Verwendung des konfigurierten neuronalen Spiking-Netzwerks, um ein Ausgangssignal des neuronalen Spiking-Netzwerks zu erhalten.

## Revendications

1. Procédé de traitement d'un signal au moyen d'un réseau de neurones à impulsions, dans lequel
le réseau de neurones à impulsions comprend une pluralité de neurones à impulsions, et une pluralité d'éléments synaptiques reliant les neurones à impulsions entre eux pour former le réseau mis en œuvre sous forme matérielle,
dans lequel chaque élément synaptique est adapté pour recevoir un signal d'entrée synaptique et appliquer un poids au signal d'entrée synaptique afin de générer un signal de sortie synaptique, les éléments synaptiques étant configurables pour ajuster le poids appliqué par chaque élément synaptique, et
dans lequel chacun des neurones à impulsions est adapté pour recevoir un ou plusieurs des signaux de sortie synaptiques provenant d'un ou plusieurs des éléments synaptiques et générer un signal de sortie sous forme de train d'impulsions spatio-temporel en réponse au ou aux signaux de sortie synaptiques reçus,
dans lequel un groupe local de réponse au sein du réseau comprend un ensemble des neurones à impulsions et une pluralité d'éléments synaptiques reliant l'ensemble des neurones à impulsions entre eux,
dans lequel le procédé comprend les étapes consistant à :
obtenir le signal à traiter, dans lequel le signal à traiter est représentable dans le domaine fréquentiel ;
configurer le réseau de neurones à impulsions en réglant les poids des éléments synaptiques et le comportement d'émission d'impulsions des neurones à impulsions dans le groupe local de réponse de sorte que l'état du réseau au sein du groupe local de réponse soit une solution numérique en régime permanent lorsqu'une distribution stochastique de l'activité ou un paramètre statistique de l'ensemble de neurones au sein du groupe local est stationnaire, la solution numérique en régime permanent désignant un état du réseau présentant un comportement établi dans lequel le comportement récemment observé du système se poursuivra dans le futur,
dans lequel la solution numérique en régime permanent est une solution de l'équation : $EK {\left(t\right)}_{∝} + K {\left(t\right)}_{∝} {E}^{T} + {FF}^{T} = 0 ,$
où *K*(*t*)_{∝} est la valeur en régime permanent de la fonction d'autocorrélation *K*(*t*) de la commande synaptique Γ(*t*), *F*(*t*) est la fonction déterministe de la partie stochastique de la commande synaptique Γ(*t*) telle que donnée par la formule : $Γ \left(t\right) = Φ \left(t, {t}_{0}\right) Γ \left({t}_{0}\right) + {\int }_{{t}_{0}}^{t} Φ \left(t, τ\right) F \left(τ\right) dω \left(τ\right) ,$
où Φ(*t*, *τ*) est la matrice de transition d'état de la commande synaptique Γ(*t*) de tous les neurones au sein du groupe local de réponse et *dω* est une variation stochastique infinitésimale, et *E*(*t*) est la fonction déterministe définie par *d*Φ(*t*, *τ*)/*dt* = *E*(*t*)Φ(*t*, *τ*), dans lequel le réglage des poids des éléments synaptiques et du comportement d'émission d'impulsions des neurones à impulsions dans le groupe local de réponse, qui définissent la commande synaptique, comprend l'entraînement itératif du groupe local de réponse par optimisation des poids des éléments synaptiques et du comportement d'émission d'impulsions des neurones à impulsions, de sorte que le comportement en régime permanent requis soit atteint ;
transformer le signal à traiter, au moyen d'un encodeur, en un ou plusieurs trains d'impulsions spatio-temporels ;
traiter le ou les trains d'impulsions spatio-temporels au moyen du réseau de neurones à impulsions configuré afin d'obtenir un signal de sortie du réseau de neurones à impulsions.

2. Procédé selon la revendication 1, dans lequel le signal à traiter comprend un signal radar, lidar, biophysique, d'image ou sonore.

3. Procédé selon la revendication 1 ou 2, dans lequel le réseau de neurones à impulsions SNN est compris dans un émulateur neuromorphique de SNN, de préférence un système contenant des circuits électroniques analogiques/à signaux mixtes qui imitent les architectures neurobiologiques présentes dans le système nerveux ; et/ou
dans lequel les neurones et les éléments synaptiques sont mis en œuvre sous forme matérielle au moyen de circuits ou d'éléments de circuit analogiques ou de circuits ou d'éléments de circuit logiques numériques câblés, ou d'une combinaison de ceux-ci, de préférence dans lequel chaque neurone et chaque élément synaptique sont mis en œuvre sous la forme d'un circuit ou d'un élément de circuit matériel.

4. Procédé selon l'une quelconque des revendications précédentes, dans lequel le réseau de neurones à impulsions comprend un groupe local de commande, qui comprend un ensemble des neurones à impulsions et une pluralité d'éléments synaptiques reliant l'ensemble des neurones à impulsions entre eux, de sorte qu'un signal de sortie du groupe local de commande sert de signal d'entrée au groupe local de réponse, de sorte que le groupe local de commande et le groupe local de réponse sont couplés avec une intensité de couplage particulière, dans lequel le procédé comprend en outre l'étape consistant à :
régler l'état du réseau au sein du groupe local de réponse pour qu'il présente un régime permanent lorsque l'intensité de couplage particulière est inférieure à une intensité de couplage prédéterminée.

5. Procédé selon l'une quelconque des revendications précédentes, dans lequel une distribution stochastique de l'activité ou un paramètre statistique de l'ensemble de neurones au sein du groupe local de réponse est stationnaire ou non stationnaire lorsque l'intensité de couplage particulière est inférieure à l'intensité de couplage prédéterminée.

6. Procédé selon l'une quelconque des revendications précédentes, dans lequel une augmentation de la dimensionnalité structurelle du groupe local de réponse est réalisée en assurant une synchronisation externe généralisée entre le groupe local de commande et le groupe local de réponse, dans lequel la synchronisation externe généralisée est le couplage du groupe local de commande au groupe local de réponse au moyen de l'intensité de couplage particulière qui est supérieure ou égale à l'intensité de couplage prédéterminée, de préférence dans lequel la synchronisation externe généralisée est assurée sur la base de la fonction d'autocorrélation moyenne 1/*N* × {∑ E [Γ(*t* + *τ*/2)Γ(*t* - *τ*/2)*^{T}*]} de la commande synaptique Γ(*t*), *τ* étant le retard, *N* étant le nombre de neurones dans le groupe local de réponse, la moyenne étant calculée sur la population de neurones.

7. Procédé selon l'une quelconque des revendications précédentes, dans lequel la solution numérique en régime permanent est obtenue au moyen de connexions de rétroaction entre les neurones dans le groupe local de réponse, ce qui entraîne la synchronisation de l'activité neuronale des neurones.

8. Système comprenant un réseau de neurones à impulsions, destiné à traiter un signal représentable dans le domaine fréquentiel, dans lequel le réseau de neurones à impulsions comprend une pluralité de neurones à impulsions et une pluralité d'éléments synaptiques reliant les neurones à impulsions entre eux pour former le réseau mis en œuvre sous forme matérielle,
dans lequel chaque élément synaptique est adapté pour recevoir un signal d'entrée synaptique et appliquer un poids au signal d'entrée synaptique afin de générer un signal de sortie synaptique, les éléments synaptiques étant configurables pour ajuster le poids appliqué par chaque élément synaptique, et
dans lequel chacun des neurones à impulsions est adapté pour recevoir un ou plusieurs des signaux de sortie synaptiques provenant d'un ou plusieurs des éléments synaptiques et générer un signal de sortie sous forme de train d'impulsions spatio-temporel en réponse au ou aux signaux de sortie synaptiques reçus,
dans lequel un groupe local de réponse au sein du réseau comprend un ensemble des neurones à impulsions et une pluralité d'éléments synaptiques reliant l'ensemble de neurones entre eux,
dans lequel les poids des éléments synaptiques et le comportement d'émission d'impulsions des neurones à impulsions dans le groupe local de réponse sont réglés de sorte que l'état du réseau au sein du groupe local de réponse soit une solution numérique en régime permanent lorsqu'une distribution stochastique de l'activité ou un paramètre statistique de l'ensemble de neurones au sein du groupe local est stationnaire, la solution numérique en régime permanent désignant un état du réseau présentant un comportement établi dans lequel le comportement récemment observé du système se poursuivra dans le futur, dans lequel la solution numérique en régime permanent est une solution de l'équation : $EK {\left(t\right)}_{∝} + K {\left(t\right)}_{∝} {E}^{T} + {FF}^{T} = 0 ,$
où *K*(*t*)_{∝} est la valeur en régime permanent de la fonction d'autocorrélation *K*(*t*) de la commande synaptique Γ(*t*), *F*(*t*) est la fonction déterministe de la partie stochastique de la commande synaptique Γ(*t*) telle que donnée par la formule : $Γ \left(t\right) = Φ \left(t, {t}_{0}\right) Γ \left({t}_{0}\right) + {\int }_{{t}_{0}}^{t} Φ \left(t, τ\right) F \left(τ\right) dω \left(τ\right) ,$
où Φ(*t, τ*) est la matrice de transition d'état de la commande synaptique Γ(*t*) de tous les neurones au sein du groupe local de réponse et *dω* est une variation stochastique infinitésimale, et *E*(*t*) est la fonction déterministe définie par *d*Φ(*t, τ*)/*dt* = *E*(*t*)Φ(*t, τ*) ; dans lequel le réglage des poids des éléments synaptiques et du comportement d'émission d'impulsions des neurones à impulsions dans le groupe local de réponse qui définissent la commande synaptique comprend l'entraînement itératif du groupe local de réponse par optimisation des poids des éléments synaptiques et du comportement d'émission d'impulsions des neurones à impulsions, de sorte que le comportement en régime permanent requis soit atteint ; et dans lequel le système comprend en outre :
un encodeur configuré pour transformer le signal à traiter en un ou plusieurs trains d'impulsions spatio-temporels ; et
dans lequel le réseau de neurones à impulsions est configuré pour traiter le ou les trains d'impulsions spatio-temporels afin d'obtenir un signal de sortie du réseau de neurones à impulsions.

9. Système selon la revendication 8, dans lequel le signal à traiter comprend un signal radar, lidar, d'image ou sonore.

10. Système selon la revendication 8 ou 9, dans lequel le réseau de neurones à impulsions SNN est compris dans un émulateur neuromorphique de SNN, de préférence un système contenant des circuits électroniques analogiques/à signaux mixtes qui imitent les architectures neurobiologiques présentes dans le système nerveux ; et/ou
dans lequel les neurones et les éléments synaptiques sont mis en œuvre sous forme matérielle au moyen de circuits ou d'éléments de circuit analogiques ou de circuits ou d'éléments de circuit logiques numériques câblés, ou d'une combinaison de ceux-ci, de préférence dans lequel chaque neurone et chaque élément synaptique sont mis en œuvre sous la forme d'un circuit ou d'un élément de circuit matériel.

11. Système selon l'une quelconque des revendications 8 à 10, dans lequel le réseau de neurones à impulsions comprend un groupe local de commande, qui comprend un ensemble des neurones à impulsions et une pluralité d'éléments synaptiques reliant l'ensemble des neurones à impulsions entre eux, de sorte qu'un signal de sortie du groupe local de commande sert de signal d'entrée au groupe local de réponse, de sorte que le groupe local de commande et le groupe local de réponse sont couplés avec une intensité de couplage particulière,
dans lequel l'état du réseau au sein du groupe local de réponse présente un régime permanent lorsque l'intensité de couplage particulière est inférieure à une intensité de couplage prédéterminée.

12. Système selon l'une quelconque des revendications 8 à 11, dans lequel le groupe local de commande est un encodeur d'entrée du réseau de neurones à impulsions qui transforme un signal d'entrée échantillonné en trains d'impulsions spatio-temporels qui sont ensuite traités par le groupe local de réponse.

13. Procédé de traitement d'un signal d'entrée représentable dans le domaine fréquentiel au moyen du système selon l'une quelconque des revendications 8 à 12, comprenant les étapes consistant à :
obtenir le signal à traiter ;
transformer le signal à traiter au moyen d'un encodeur en un ou plusieurs trains d'impulsions spatio-temporels ; et
traiter le ou les trains d'impulsions spatio-temporels au moyen du réseau de neurones à impulsions configuré afin d'obtenir un signal de sortie du réseau de neurones à impulsions.
